# EUROPEAN PATENT SPECIFICATION

(11) **EP 2 702 593 B1**
(45) Date of publication and mention of the grant of the patent: **26.08.2015**
(21) Application number: 12728780.3
(22) Date of filing: 26.04.2012
(51) Int. Cl.: G21B 3/00

(54) **METHOD AND APPARATUS FOR GENERATING ENERGY BY NUCLEAR REACTIONS OF HYDROGEN ADSORBED BY ORBITAL CAPTURE ON A NANOCRYSTALLINE STRUCTURE OF A METAL**
VERFAHREN UND VORRICHTUNG ZUR ENERGIEERZEUGUNG DURCH NUKLEARREAKTIONEN VON DURCH ORBITALE ERFASSUNG AUF EINER NANOKRISTALLINEN STRUKTUR EINES METALLS ADSORBIERTEM WASSERSTOFF
PROCÉDÉ ET APPAREIL POUR GÉNÉRER DE L'ÉNERGIE PAR RÉACTIONS NUCLÉAIRES D'HYDROGÈNE ADSORBÉ PAR CAPTURE ORBITALE SUR UNE STRUCTURE NANOCRISTALLINE D'UN MÉTAL

(30) Priority: 26.04.2011 IT PI20110046
(43) Date of publication of application: 05.03.2014
(73) Proprietor: Piantelli, Silvia, 53100 Siena (SI) (IT); Meiarini, Alessandro, 53100 Siena (IT); Ciampoli, Leonardo, 20090 Trezzano Sul Naviglio (IT); Chellini, Fabio, 53100 Colle Val D'Elsa (IT)
(72) Inventor: PIANTELLI, Francesco, I-53100 Siena (IT)
(74) Representative: Celestino, Marco
(86) International application number: PCT/IB2012/052100
(87) International publication number: WO 2012/147045

(56) References cited:
- EP-A2- 0 461 690
- WO-A1-95/20816
- WO-A1-2009/125444
- WO-A1-2010/058288
- FR-A- 570 251
- US-A- 3 162 577
- G. Bettini: "How can 30% of nickel in Rossi reactor be transmuted into copper?", Journal of Nuclear Physics, 4 April 2011 (2011-04-04), pages 1-3, XP002664056, Retrieved from the Internet: URL:http://www.journal-of-nuclear-physics. com/?p=473 [retrieved on 2011-11-16]

## Description

### Field of the invention

The present invention relates to an improvement of the method and of the generator described in international patent application WO2010058288, claiming Italian priority ITPI2008A000119.

In particular, the present invention relates to a method and to a generator for increasing the production of energy with respect to what is possible with the method and the generator described in the above indicated patent application. Furthermore, the invention relates to a method and to a generator suitable for adjusting the production of energy starting from the method and with the generator of this previous patent application.

### Technical problem

From WO9520816 a method is known for obtaining energy from nuclear reactions which take place due to the interaction between hydrogen and a metal core.

From WO2010058288 a method is known for obtaining energy from nuclear reactions of a core comprising cluster nanocrystalline structures of a transition metal, as well as a generator for carrying out this method.

Among the critical aspects of the disclosed method and generator, the need is felt to provide an increase of the production rate, in order to achieve industrially acceptable levels.

Another critical aspect of the method is the adjustment of the generated power. Equally critic, in the generator, are the devices for carrying out this adjustment.

In WO 2009125444 a method and an apparatus are described for carrying out an exothermic reaction of Nickel and hydrogen, in which a metal tube of copper is filled of powder, granules or bars of Nickel, and then injected with pressurized hydrogen and eventually heated up to a reference temperature, to generate energy. In particular, the copper metal tube is externally coated with a jacket of Boron and water, or of steel and Boron, as well as with a lead jacket. The lead jacket has the object of containing harmful radiation, not better specified in the document. Presumably, such radiations are neutrons that could have enough energy to travel beyond the copper tube. The lead jacket has the object to obtain energy from such radiations. The position of the Boron allows recovering energy only by the radiations that can go beyond the wall of the copper tube. Therefore, there is a limitation to the energy that can be recovered by the process.

### Summary of the invention

It is therefore a feature of the present invention to provide exemplary embodiments of the method and of the generator described in WO2010058288, which allow to increase the generation of energy until it reaches industrially acceptable levels.

It is another feature of the present invention to provide exemplary embodiments of this method and of this generator, which allow to adjust in a reliable and precise way the power supplied by the generator.

These and other objects are achieved by a method to obtain energy by nuclear reactions between hydrogen and a transition metal, the method including the steps of:
- prearranging a primary material comprising a predetermined amount of cluster nanostructures having a number of atoms of the transition metal lower than a predetermined number of atoms;
- keeping the hydrogen in contact with the clusters;
- heating the primary material at an initial process temperature that is higher than a predetermined critical temperature, in particular by creating in the primary material a predetermined temperature gradient;
- dissociation of molecules of said hydrogen H₂ and formation of H- ions as a consequence of the step of heating;
- impulsively acting on the primary material
- orbital capture reaction of H- ions by the cluster nanostructures as a consequence of the step of impulsively acting;
- capture of the H- ions by the atoms of the clusters, generating a thermal power as a primary reaction heat;
- removing a thermal power, while maintaining the temperature of the primary material above the critical temperature,
wherein the main feature of the method is that of prearranging an amount of a secondary material is provided, said amount of a secondary material facing the primary material and within a predetermined maximum distance from the primary material, the secondary material arranged to interact with protons emitted by the primary material by energy-releasing proton-dependent nuclear reactions that occur with a release of a further thermal power in the form of a secondary reaction heat. This way, the step of removing a thermal power comprises the generated thermal power as said primary reaction heat (Q₁) and as said secondary reaction heat (Q₂).

As the secondary material, any element of the table of Mendeleev can be used, which has a threshold for a nuclear reaction with protons that is lower than the energy of the protons emitted by the active core.

With respect to what is described in WO2010058288, the method further provides arranging a material, called the secondary material, whose proton-dependent reactions have a thermal effect which is suitable for remarkably increasing the amount of heat that can be globally obtained from the process.

This way, protons of energy higher than a predetermined energy threshold, which are emitted from the clusters by the orbital capture of the H-ions, cause such energy-releasing proton-dependent nuclear reactions. Therefore, the removed thermal power comprises both the primary reaction heat, which is associated with the orbital capture reactions, and the secondary reaction heat, which is associated with the proton-dependent reactions.

In particular, in the clusters of the primary material the H- ions are subjected to nuclear orbital capture reactions by the cluster crystalline structure of the primary material that form the core, i.e. the active core. Then, the H- ions are subjected to a capture by the atoms of the cluster, and lose their own couple of electrons thus creating protons ¹H.

Subsequently, more in detail,
- a first portion of protons ¹H is subjected to nuclear reactions of direct capture by the nuclei of the atoms of the clusters. Such reactions are indicated hereinafter as internal primary nuclear reactions;
- a second portion of protons ¹H is subjected to a Coulomb repulsion by the nuclei of the atoms of the primary material that have caused the orbital capture. Such second portion of protons ¹H gives origin to:
   - protons that are expelled by the nuclei, which have a determinable and characterizable energy. For example, in case of Nickel, the expelled protons have an energy of about to 6.7 MeV. Such expelled protons can interact with other nuclei of the primary material that belong to a same cluster, or that belong to proximate clusters, and can cause delayed reactions. These delayed reactions are indicated hereinafter as external primary nuclear reactions;
   - protons that are expelled and emitted by the primary material, hereinafter simply indicated as emitted protons, which also have a determinable and characterizable energy, as described above. The emitted protons can interact with nuclei of secondary material causing the proton-dependent reactions, which are also reactions delayed with respect to the internal primary nuclear reactions. It is relevant that the secondary material faces the primary material, since, if a further material is present between the primary material and the secondary material, the protons would not go beyond this further material and would not reach the secondary material.

Examples of internal primary nuclear reactions are the reactions indicated hereinafter as {1a}, {1b}, {1c}, {1d}, {1e}, which refer to the case in which the primary material is Nickel.

Examples of secondary reactions are the reactions indicated hereinafter as {2a}, {2b}, {3a}, {3c}, which refer to the case in which the secondary material is Lithium.

Other examples of secondary reactions are the reactions indicated hereinafter as reactions {6a}, {6b}, {7a}, {7b}, which refer to the case in which the secondary material is Boron.

Further examples of secondary reactions are the reactions indicated hereinafter as reactions {10a}, {10b}, {10c}, {10d}, which refer to the case in which the secondary material comprises some transition metals.

The primary reactions, both internal and external, globally occur generating a primary reaction heat, which is the heat that can be obtained according to the method described in WO2010058288, and which relates to the sole anharmonic interaction between H- ions and the nanostructures of transition metals. Furthermore, the protons emitted by Coulomb repulsion reach the secondary material, provided the secondary material, as said above, faces the primary material and is located within a predetermined maximum distance. Such maximum distance corresponds to the average free path that such protons can travel before decaying into atomic hydrogen.

Hereinafter, by the expression "exposed secondary material" a secondary material is intended that faces the primary material and that is located within said predetermined maximum distance from the cluster. The exposed secondary material can then be attained by the emitted protons, and can react with the latter the secondary reactions, thus contributing to increase the thermal energy produced by the process. For instance, the secondary material may be an internal coating of a container that contains the primary material, the secondary material may also be a material that is arranged between the container of the primary material and the primary material itself. In such conditions, the generated thermal power, which is available to be removed, comprises the first fraction and the second fraction of the reaction heat, since, as said above, the protons that are emitted by the primary material and that reach the secondary material cause the secondary nuclear reactions, thus generating a secondary reaction heat that is added to the first fraction of reaction heat of the primary internal and external reactions.

The rate of secondary reaction heat depends upon the amount of secondary material that is exposed to the protons emitted by the clusters, and has an upper limit represented by the amount of this material that can be arranged within a distance from the clusters equal to the above-defined distance.

Without such a secondary material, the protons that are not captured by the nuclei of the primary material are in any case expelled by the atoms of the primary material, that are emitted by the active core, and can impact against the internal coating of the container of the primary material, but they do not cause further significant energy generation. Therefore, they do not provide a useful contribution to the energy balance, which occurs, instead, according to the invention, due to the delayed secondary reactions that involve the secondary material.

Examples and data of internal primary nuclear reactions, of external primary reactions and of secondary reactions are given in the detailed description of exemplary embodiments of the method.

Preferably, the hydrogen that is in contact with the clusters is at a pressure set between 150 and 800 mbar absolute.

In particular, the primary material comprises Nickel. Still in particular, the maximum predetermined distance between the primary material and the secondary material is set between 7 and 8 cm, more in particular, in the case of Nickel, said distance is about 7.5 cm. In fact, in the case of Nickel, the emitted protons can achieve an energy of about 6.7 MeV, arid in the presence of a hydrogen pressure set between the above-indicated values, can travel at most a distance of about 7.5 cm before decaying to atomic hydrogen, starting from the generation site, i.e. from the surface of the active core where the clusters are present.

In particular, the secondary material that is arranged to interact with the protons comprises Lithium, in particular a Lithium that comprises predetermined fractions of ⁶Li and ⁷Li isotopes.

In particular, the secondary material that is arranged to interact with the protons comprises Boron, in particular a Boron that comprises predetermined fractions of ¹⁰B and ¹¹B isotopes.

In fact, among the materials that can capture protons and that can give rise to proton-dependent reactions, Lithium and Boron offer the maximum contribution energy that is associated with the proton-dependent secondary reactions. ⁷Li and ¹¹B isotopes, which are present in natural Lithium and natural Boron according to respective occurrences of about 92.4% and 81.2%, cause energy-releasing reactions, in particular cause reactions {2a}, {2b}, {6a}, {6b}, that are given hereinafter. Some of these reactions occur with production of α particles, i.e. ⁴He, which, in turn, may lead to consecutive reactions with the same isotopes, for instance according to reactions {5a}, {8a}, thus releasing further energy.

In particular, the secondary material that is arranged to interact with the protons is selected among the d-block and f-block transition metals. Advantageously, the secondary material is selected among the ancestors of the four decay families, i.e. ²³²Th, ²³⁶U, ²³⁹U, ²³⁹Pu. These transition metals cause energy-releasing reactions, in particular reactions {10a}, {10b}, {10c}, {10d}.

The use of α-emitting material as the secondary material can also give rise to α-dependent reactions with the metal of the primary material, for instance to reactions {11a}, {11b}, {11c}, {11d}, {11e}, that are given hereinafter, with reference to the case in which the primary material comprises Nickel.

Furthermore, the use of radioactive materials, such as those shown above, as the secondary material, provides a possibility of a eliminating radioactive waste of various provenience, and provides a further energy recovery.

According to another aspect of the invention, a step is provided of adjusting the generated heat, which comprises a step of adjusting the amount of the secondary material that is exposed to the emitted protons, i.e. that faces the primary material and that is arranged within the predetermined maximum distance, which, therefore, can give rise to the secondary reactions with the protons emitted by the primary material, which have an energy higher than the predetermined threshold, with the secondary reactions. By increasing or decreasing the amount of exposed secondary material, which can be reached by the emitted protons before they hydrogen, the number of delayed secondary reactions per time unit occurring between the emitted protons and the secondary material increases, or decreases. Therefore, the second fraction of reaction heat increases or decreases, respectively, thus changing the thermal power that is globally generated, in a way depending upon how the amount of exposed secondary material increases or decreases. Therefore, it is possible to adjust the generated thermal power by suitably adjusting the amount of the secondary material that is located within a certain distance from the active core.

In particular, the step of adjusting the amount of secondary material exposed to the emitted protons may be obtained by arranging an adjustment body between the primary material and the secondary material, said adjustment body comprising a shield body that is movable between a first position and a second position, the two positions corresponding to the maximum exposition and to the minimum exposition of the secondary material with respect to the primary material, respectively. Alternatively, the step of adjusting the amount of secondary material exposed to the emitted protons may be obtained by arranging an adjustment body proximate to the primary material, said adjustment body comprising a body that carries the secondary material, i.e. a support body that is movable between a first position and a second position, such two positions corresponding to the maximum exposition and to the minimum exposition of the secondary material with respect to the primary material. For instance, the adjustment support body may be arranged between the active core and a container that contains it, or the adjustment support body may be arranged between active core portions that are adjacent to each other, for example between primary elements that are substantially plane and that are parallel to each other, as described more in detail hereinafter.

Therefore, besides an enrichment and boost function of a generator as described in WO2010058288, the secondary material allows also adjusting the thermal power between:
- a minimum value, for example a value that corresponds to the sole production of energy from the primary internal and external nuclear reactions involving the transition metal, or involving the transition metals, if more than one, which belong/s to at least one of the four transition metals groups, also comprising Th, U, Pu and other transuranic metals;
- a maximum value that depends, in particular, upon the amount of secondary material that is located within a predetermined distance from the primary material, i.e. the amount of secondary material that may be exposed to be attained by the protons emitted by the clusters of the primary material, before these decay.

The objects of the invention are also achieved by a generator of energy by nuclear reactions between hydrogen and a transition metal, the generator comprising:
- an active core that include a predetermined amount of a primary material comprising cluster nanostructures having a predetermined maximum number of atoms;
- a generation chamber containing the active core and arranged to contain hydrogen, in order to provide a contact of the hydrogen with the clusters of the active core;
- a heating means for heating the active core in the generation chamber up to an initial process temperature that is higher than a predetermined critical temperature, the initial process temperature suitable for causing a dissociation of H₂ molecules of hydrogen and a formation of H- ions;
- a trigger means for creating an impulsive action on the active core, the impulsive action suitable for causing an orbital capture of the H⁻ ions buy the cluster crystalline structure, and subsequently a step of capture by atoms of the clusters, thus generating a primary reaction heat;
- a heat removal means for removing a thermal power from the generation chamber, and for maintaining the temperature of the active core above the critical temperature while said thermal power is removed,
wherein the main feature of the generator is that it comprises an amount of a secondary material within a predetermined maximum distance from the material of the active core, said secondary material arranged to interact with protons of energy higher than a predetermined energy threshold, such that protons emitted by the orbital capture of the H- ions causes nuclear secondary energy-releasing reactions that occur with a release of a secondary reaction heat, the maximum distance responsive to the transition metal, such that the heat removal means can remove a thermal power that comprises the primary reaction heat and the secondary reaction heat.

Such a generator enables the a method according to the invention, with a high production rate increase with respect to a generator described in WO2010058288 that comprises the same transition metal or the same transition metals, and that works at the same triggering conditions and at the same operative conditions.

In an exemplary embodiment of the generator, the hydrogen is present in the generation chamber at a pressure set between 150 and 800 mbar absolute.

In particular, the primary material comprises Nickel, and the maximum distance from the active core, within which the secondary material must be located to allow the proton-dependent reactions, is set between 7 and 8 cm, in particular close to 7.5 cm. In fact, in the case of Nickel, the emitted protons can reach an energy level of about 6.7 MeV, and in the presence of a hydrogen pressure set between the above indicated values, can travel along a distance of at most about 7,5 cm, starting from the surface of the active core where the clusters are provided.

Preferably, the secondary material arranged to interact with the protons is selected from the group consisting of:
- Lithium, in particular comprising isotopes ⁶Li and ⁷Li;
- Boron, in particular comprising isotopes ¹⁰B and ¹¹B.

In alternative, or in a combination, the secondary material arranged to interact with the protons is selected among the transition metals, in particular the secondary material is selected from the group consisting of: ²³²Th, ²³⁶U, ²³⁹U, ²³⁹Pu.

In particular, the generator is provided with a secondary element, i.e. with a solid body that comprises the secondary material.

Advantageously, the secondary element comprises at least one metal in an amorphous or glass state, i.e. at least one metal in which it a crystalline ordered structure is substantially missing.

In particular, the secondary material comprises an alloy of a plurality of metals, in particular an alloy in the amorphous state. For instance, the alloy may comprise Sc, Ti, V, Cr, Mn, Fe, Co, Cu, Ni, Zr, Pd, Ag Cd, Mo, Au, Pt, together with Li, Be, B, Mg, Al, Si, P, Ca, K, and with the metals of the rare earths group.

The alloy may comprise a structural metal and the secondary material, wherein the weight ratio between the structural metal and the secondary material is set between 3 and 5. In particular, this ratio is set between 3,7 and 4,3, more in particular, this ratio is about 4. For example, the structural metal of the alloy may comprise iron and/or Nickel, according to a predetermined weight ratio.

Independently from the structural metal, the secondary material of the alloy may comprise Boron and/or Lithium, wherein, in particular Lithium is present in the alloy according to a predetermined weight proportion, set between 1% and 10%, with respect to the weight of the secondary element.

The secondary material of the alloy may comprise a transition metal according to a predetermined proportion.

The active core may comprise a support body made of a metal or non-metal material and a coating of the support made of the primary material, which is in the form of nanometric clusters. The coating of nanometric clusters may be made by a process selected among those indicated in WO2010058288, for example by a process selected from the group consisting of: chemical deposition, an electrolytic deposition, a spraying technique, a sputtering technique.

Advantageously, the metal support of the active core comprises a metal in a glass state, in other words it comprises at least one metal in which a crystalline ordered structure is substantially missing.

The secondary element and/or the support body of an amorphous metal may be obtained by a process comprising the steps of:
- prearranging an amount of this metal in the molten state, at a predetermined temperature and according to a prefixed shape;
- cooling the molten metal in the above shape at a cooling speed high enough such that the molten metal hardens maintaining the amorphous state, i.e. at a cooling speed high enough to avoid the formation of metal crystal structures.

Advantageously, the cooling speed is equal to or higher than 1000°C/second, responsive to the metal or the metals that is/are used.

In particular, the step of prearranging comprises a step of injection moulding within a cooled mould, or a manufacturing procedure providing a step of injecting a molten metal onto a rotating cylinder or onto a sliding plane having a predetermined speed, while the cooling step comprises prearranging a quick cooling means, such as an amount or a flow or of liquid nitrogen, on a surface of the cylinder or the plane.

The injection moulding technique provides very thin components, which have a very favourable mechanical strength/weight ratio, without substantially requiring welded joints and forming and finishing mechanical manufacturing steps. This causes a remarkable cost reduction. The injection moulding technique is particularly advantageous if the active core and the secondary elements have a flat shape and small thicknesses. This technique is also advantageous to provide containing elements, i.e. the walls of the generation chamber, which comprise a transition material and, more in particular, the secondary material.

Furthermore, a volume weight reduction of the generator is also obtained, which causes a remarkable material saving and a remarkable production cost reduction.

The use of metals and metal alloys in the amorphous state has also the advantage of a better resistance against the corrosion, since grain boundaries are missing, in which corrosion events might take place. Furthermore, if metals and metal alloys are used in the amorphous state, it is possible to obtain a material that has particular electric features such as a high resistance, unaffected by the temperature, or the absence of the Weiss domains, therefore a high coercibility (substantially no hysteresis cycle) is obtained even if a high permeability is preserved. For instance, an amorphous metal Fe/B 80/20% shows its own saturation condition at about 1.5 Tesla, at 20°C.

The support of the active core may comprise a transition metal, in particular a transition metal in the amorphous state as indicated above. Such transition metal can be selected from the group consisting of: Ni, Cr, Zr and Mo or a combination thereof, and can include a low-melting metal such as Al. For example, the support may comprise an alloy of element percentages about 70% Ni, 10% Cr, 5% Zr, 15% Al. The transition metal of the support may be present also in the primary material, in the form of micro-nanometric clusters.

The support of the active core and/or the secondary element may comprise a coating layer made of a metal, for example of the metal that forms the bulk of the support or of the secondary element, which comprises dendritic structures. This way, bodies are obtained that can tolerate the plastic deformation, and the crack propagation is substantially impossible.

In alternatively, the support of the active core and/or the secondary element may be made by a sintering process, in the form of laminas, at pressures of 200 bar or higher.

In an exemplary embodiment, the secondary element forms a portion of a containing element for the active core, in particular it forms a portion of a wall of the generation chamber. In particular, this containing element comprises an alloy of a structural metal and of the secondary material. In other words, the secondary element may coincide with a containing element for the active core. Advantageously, the structural metal of the containing element comprises a transition metal.

In alternative, the secondary material forms secondary elements that integral to the containing element. Due to the relative production ease, this exemplary embodiment is well-suited to make small-power and low-cost generators.

The material of this containing element may in turn comprise a transition metal such as Nickel, in combination or not with the secondary material. In this case, the protons emitted by the active core can reach the containing element and can engage with the transition metal and/or with the secondary material according to the above-mentioned reactions. These reactions occur with production of energy, and cause a progressive conversion of the transition metal of the containing element into reaction products.

In another exemplary embodiment, the active core comprises a plurality of substantially plane primary elements that are at least in part made of the primary material, and a plurality of substantially plane secondary elements is provided, which are at least in part made of the secondary material, where the primary elements and the secondary elements are advantageously arranged such that each primary element interposes between two secondary elements, and each secondary element interposes between two primary elements. This allows creating a high surface of exposed secondary material, for a same size of the generator. The surface of the exposed secondary material increases as the thickness decreases and as the mutual distance decreases between the substantially plane primary elements and the substantially plane secondary elements. Such exemplary embodiment It is therefore arranged to generators having a power belt upper of the field of power producible by the generator.

In particular, the substantially plane primary elements can comprise of the primary laminas that are at least in part made of the primary material, provided this is present in the form of nanometric cluster.

As described above, but without excluding other possibility, the substantially plane primary elements of the active core can comprise:
- a support, i.e. a core, of a non metal material, or a metal support, in particular a metal support of an amorphous metal made, for example, as indicated above;
- a coating of the support made in the primary material, in the form of nanometric cluster.

In particular, the substantially plane secondary elements can comprise secondary laminas that are at least in part made of the secondary material.

Alternatively, but without excluding other possibilities, the substantially plane secondary elements can comprise a structural material along with the secondary material, for example in the form of an alloy having amorphous structure.

The substantially plane primary and secondary elements are advantageously, obtainable by the process for shaping and cooling previously described. Such process can comprise, in particular an injection moulding step.

The geometric shape of the substantially plane primary elements and of the substantially plane secondary elements can be a desired geometric shape, for example a circular, elliptical, polygonal shape with a desired number of sides, and even other shapes. The primary elements and the secondary elements have preferably shape similar to each other.

According to an aspect of the invention, the generator has adjustment means for adjusting the generated heat, the adjustment means comprising a means for adjusting the amount of this secondary material that faces the primary material and that is arranged within the maximum distance.

In particular, the adjustment means for adjusting the generated heat comprises:
- an adjustment body;
- a means for displacing the adjustment body, in the generation chamber, with respect to the primary material between a first position and a second position, corresponding respectively to a maximum exposition and to a minimum exposition of the secondary material on the primary material.

In an exemplary embodiment, the adjustment body comprises a shield body arranged between the primary material and the secondary material, the shield body being movable between the first position of maximum exposition and the second position of minimum exposition.

In another exemplary embodiment, the adjustment body comprises a support body for the secondary material arranged near the primary material, the support body being movable between the first position of maximum exposition and the second position of minimum exposition. In particular, the adjustment support body can be arranged between the active core and a containing element for the active core, or can comprise a plurality of secondary elements arranged between active core portions adjacent to each other, for example between substantially plane primary elements arranged parallel to each other, as described above.

This way, by a predetermined movement of the adjustment body, i.e. of the shield body and/or the support body, it is possible to increase/decrease the amount of exposed secondary material, and to obtain a corresponding increase/decrease of energy delivered by the generator.

In an exemplary embodiment, the active core comprises a hollow body, and the adjustment body comprises a support body slidingly arranged in a recess of the active core. The hollow body of the active core can be a tubular body whose cross section may have a whichever plane geometric shape, the tubular body having a central elongated recess. For example, this tubular body may have circular, elliptical, polygonal cross section with a desired number of sides. The adjustment body can be an elongated body, for example it can be a body having the shape of a cylinder or of a parallelepiped whose cross section may have a whichever plane geometric shape. In particular, this elongated body may have circular, elliptical, polygonal cross section with a desired number of sides, such that it allows a movement, in particular a co-axial sliding in the recess of the tubular body.

In another exemplary embodiment, the adjustment body comprises a plurality of substantially plane adjustment elements integral to one another, which are arranged such that each adjustment element slidingly interposes between two secondary elements, or between a primary element and a secondary element according to whether the adjustment body is a support body or is a shield body, and the means for displacing the adjustment body is configured to provide a relative movement between the adjustment elements and the primary elements and/or the secondary elements interposed to each other, according to the planes common to the substantially plane primary and/or secondary elements and to the substantially plane adjustment elements. This way, it is possible to adjust integrally respective surface portions of each secondary element facing the primary elements, adjusting the amount of secondary material exposed to the protons emitted by the primary material of the primary elements of the active core, i.e. exposed to the protons emitted by the clusters of the primary material. This makes it possible to obtain a high adjustment capacity of the generator for a same size of the generator. Such adjustment capacity increases as the thickness decreases and/or as the mutual distance decreases between the substantially plane primary elements and the substantially plane secondary elements.

In particular the substantially plane primary and/or secondary elements and/or the substantially plane adjustment elements are arranged integrally rotatable about an axis of the generator, and the adjustment means comprises a relative rotation means of the plurality of primary and/or secondary elements and of the plurality of adjustment elements about this axis. In this case, the primary and/or secondary elements and/or the adjustment elements have preferably the shape of circular sector, and the axis of the generator is an axis in common to the circular discs.

In a possible alternative embodiment, the adjustment means comprises a relative translation means of the plurality of primary and/or substantially plane secondary elements and of the plurality of substantially plane adjustment elements according to a direction of the planes common to the primary and/or secondary elements and to the adjustment elements.

The primary and/or secondary elements, and/or the substantially plane adjustment elements can comprise films or film, and a stretching means is provided to keep stretched such substantially plane adjustment elements.

### Brief description of the drawings

The invention will be now shown with the description of exemplary embodiments of the generator and of the method according to the invention, exemplifying but not limitative, with reference to the attached drawings, in which like reference characters designate the same or similar parts, throughout the figures in which:
- Fig. 1 is a block diagram of an exemplary embodiment of the method according to the invention, to generate energy by nuclear reactions of hydrogen adsorbed on a crystalline structure of a metal;
- Fig. 2 is a diagrammatical view of a crystal layer comprising clusters arranged on the surface of a substrate;
- Fig. 3 is a diagram of the interactions between hydrogen and the clusters in a local enlarged view of Fig. 2;
- Figs. 4 and 5 are diagrams of the orbital capture of an ion H⁻ by an atom of a transition metal, and of the subsequent steps of fusion nuclear reactions by nuclear capture of a portion of the H- ions by nuclei of the transition metal, with production of heat, and steps of transformation of other H- ions into protons ¹H⁺, followed by an expulsion by Coulomb repulsion from the atom of the transition metal and subsequent capture into a material adapted to capture protons and to interact with them by nuclear proton-dependent reactions, with a further production of energy in the form of heat;
- Figs. 6 and 6' are longitudinal sectional views of generators according to two exemplary embodiments of the present invention;
- Fig. 7 is a diagrammatical perspective view of a tubular active core of a generator according to the present invention, and of a cylindrical adjustment body of the generator that can be moved with respect to the active core, according to an exemplary embodiment of the present invention;
- Fig. 8 is an elevation front view of the active core and of the adjustment body of Fig. 6;
- Fig. 9 is a diagrammatical perspective view of a generator according to another exemplary embodiment of the present invention, in which the active core comprises two concentric cylindrical tubular bodies and the adjustment body is a tubular body that is suitable for introduction between the two cylindrical bodies of the active core;
- Fig. 10 is a diagrammatical perspective view of a generator according to a further exemplary embodiment of the present invention, in which the active core and the adjustment body comprise respective pluralities of planar bodies arranged to have an interleaved configuration;
- Fig. 11 is a partial cross sectional view of the active core and of the adjustment body of Fig. 9, according to a plane cross section defined by line A-A of Fig. 9;
- Fig. 12 is a diagrammatical exploded perspective view of a generator according to a further exemplary embodiment of the present invention, in which the active core and the adjustment body comprise respective pluralities of planar bodies arranged to have an interleaved configuration;
- Fig. 13 is an elevation front view of the generator of Fig. 12;
- Fig. 14 is a diagrammatical perspective view of a generator according to another exemplary embodiment of the present invention, wherein an elementary generation cell is provided which comprises coaxial primary and secondary elements or tubular bodies, respectively, and a tubular adjustment shield element or body that is suitable for introduction between primary and secondary tubular bodies of the elementary cell;
- Fig. 15 is a diagrammatical perspective view of a generator according to a further exemplary embodiment of the present invention, wherein an adjustment cell is provided which comprises substantially plane primary and secondary elements arranged parallel and alternate to one another, and comprises an adjustment body which has a plurality of substantially plane shield elements that are suitable for introduction between respective primary and secondary elements, by a relative translational movement;
- Fig. 16 is a partial cross sectional view of the active core and of the adjustment body of Fig. 14, according to a plane cross section defined by the line A-A of Fig. 14;
- Fig. 17 is a diagrammatical exploded perspective view of a generator according to a further exemplary embodiment of the present invention, wherein a generation cell comprises a plurality of substantially plane primary and secondary elements arranged parallel and alternate to one another, and an adjustment body comprises a plurality of substantially plane adjustment shield elements that are suitable for introduction between respective primary and secondary elements, by a relative rotational movement;
- Fig. 18 is an elevation front view of the generator of Fig. 17.

### Description of preferred exemplary embodiments

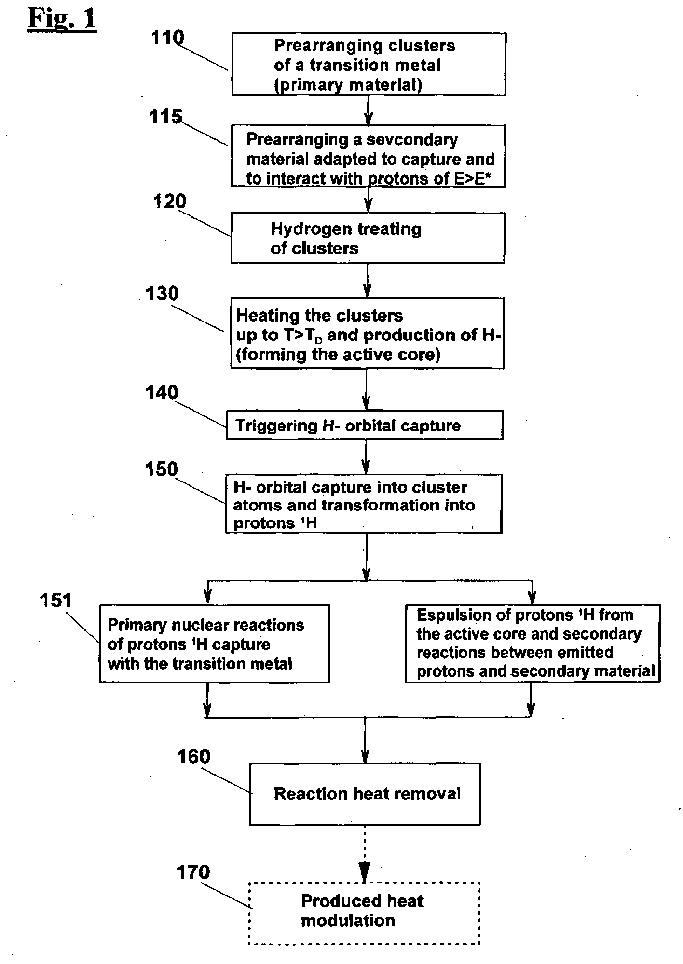

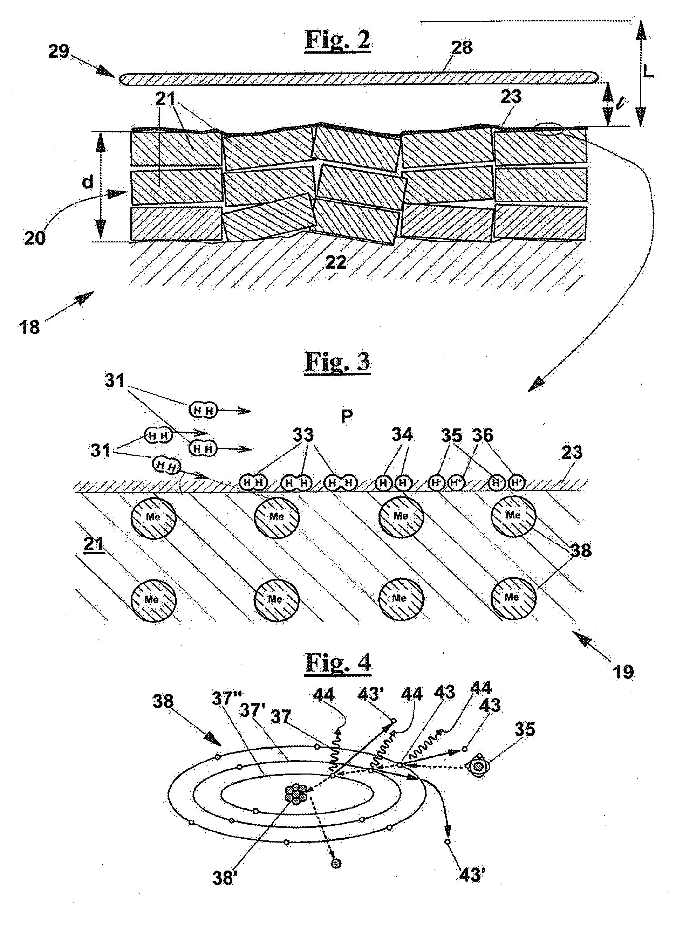

With reference to Figs. 1, 2 and 3, a method is described, according to an exemplary embodiment of the invention, to obtain energy by a sequence of nuclear reactions between hydrogen 31 and a transition metal 19 (Fig. 2). According to this exemplary embodiment, the method provides a step 110 (Fig. 1) of prearranging a primary material 19 that comprises a predetermined amount of micro-nanometric clusters 21 of a transition metal (Fig. 2). In an exemplary embodiment, the clusters 21 form a layer 20 that is arranged on a substrate 22 and is limited by an interface surface 23. Together with substrate 22, layer 20 of clusters 21 forms an active core 18. The thickness d of crystal layer 20 is preferably set between 1 nanometer and 1 micron.

In order to be clusters, crystals 21 must comprise a number of atoms of the transition metal lower than a predetermined critical number, above which the crystals lose the cluster features. In the case of a material deposited on a substrate 22, as shown in Fig. 2, the deposit must be carried out in such a way that 1 square centimetre of surface 23 contains on average at least 10⁹ clusters 21. A list of deposition methods suitable for obtaining the cluster structure is shown in patent application WO2010058288. The core can then be formed in such a way that it shows the clusters on its surface. In particular, the core may comprise a support material on which the clusters are deposited or formed, and/or a loose or sintered powder material, and/or a material deposited by a deposition process selected among a chemical process, an electrolytic process, a spraying process, a sputtering process and other processes, and a combination thereof.

The method also comprises a step 115 (Fig. 1) of prearranging an amount of a secondary material 28 (Fig. 2) that is adapted to interact with protons of energy higher than a predetermined energy threshold, according to energy-releasing proton-dependent nuclear reactions that occur with a release of energy in the form of heat. Such reactions are indicated hereinafter as secondary reactions. The secondary material 28 is arranged in front of, i.e. it faces surface 23 of active core 18, i.e. it faces clusters 21. In other words, a hypothetic observer integral to the surface 23 could see secondary material 28. Secondary material 28 is arranged at a distance 1 shorter than a predetermined maximum distance L from surface 23 of active core 18, i.e. from clusters 21, and may have a lamina shape 29 or may also have another shape, as described more in detail hereinafter.

In a subsequent step 120 of treatment (Fig. 1) of clusters 21 with hydrogen 31 (fig. 3), hydrogen 31 is brought into contact with surface 23 of clusters 21, in order to obtain a population of hydrogen H₂ molecules 33 adsorbed on surface 23. Due to the adsorption and to the temperature, the bond between the atoms of the hydrogen molecules is weakened, until homolytic or heterolytic scission or dissociation conditions are attained for molecules 33. In other words, starting from each hydrogen H₂ diatomic molecule 33 a couple of hydrogen atoms H 34, or a couple comprising a negative hydrogen ion H⁻ 35 and a positive hydrogen ion H⁺ 36 may form, respectively.

More in particular, as already described in WO2010058288, this process of bond weakening and of H- ions 35 production, in particular, is assisted by a heating step 130 of surface 23 of the cluster, from an initial process temperature T₀, typically the room temperature, up to a temperature T₁ higher than a predetermined critical temperature T_{D}. More in detail, near surface 23 of the crystals, a dynamic equilibrium is established between molecular hydrogen H₂ and, in particular, ions H⁺ 36 and H 35. This equilibrium is more or less shifted towards ions H⁺ and H⁻ responsive to such operating parameters as temperature T and pressure P of hydrogen 31.

Clusters 21 together with hydrogen 35, in the form of H⁻ ions, form an active core 18 in which the hydrogen, in the form of H- ions 35, is available for orbital capture by the atoms of clusters 21 of transition metal 19 (Fig. 3) or, in other words, by a gigantic atom of the transition metal comprising all the atoms that are arranged to form a cluster structure. Hydrogen may also undergo an interstitial adsorption at the grain boundaries and at microfractures of the transition metal, however these events of absorption are of no importance for the purpose of ions H⁻ 35 orbital capture.

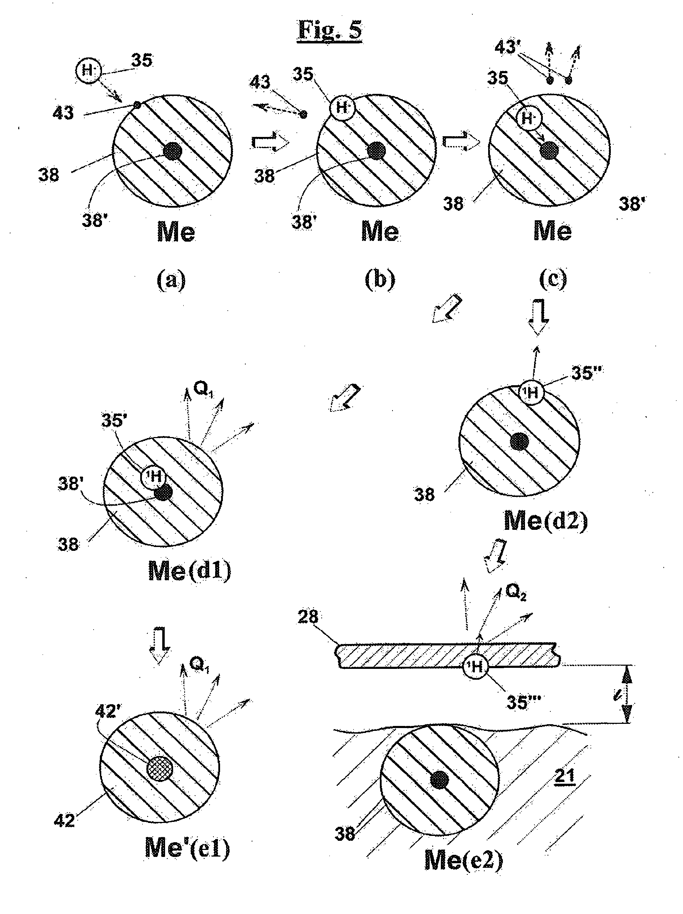

The orbital capture takes place as a consequence of a step 140 of impulsive trigger action of the energy generation process (Fig. 1). The step 140 of impulsive trigger action consists of supplying an energy pulse, for example in one of the forms and by one of the procedures that are described in WO2010058288. Such energy pulse causes an orbital capture 150 of H⁻ ions 35 by an atom 38 (Fig.3) of a cluster 21. During orbital capture 150 takes an electron 43 of atom 38 is replaced, as diagrammatically shown in Figs. 4 and 5, part. (a,b). Since H⁻ ions 35 that have been captured in the orbitals 37, 37', 37" of the transition metal have a mass three orders of magnitude larger than the mass of an electron 43, step 150 goes on with a migration of the captured ion H- until this reaches the inner layers or orbitals 37', 37", with emission of Auger electrons 43' and emission of X-ray 44, as still diagrammatically shown in Figs. 4 and 5, part. (c). In other words, capture step 150 goes on with a transformation of H⁻ ions 35 into protons ¹H 35', due to the loss of two electrons by each H⁻ ion.

Since their Bohr radius is comparable with the core radius, protons ¹H 35' can be captured by the nucleus and can undergo a step 151 of nuclear capture reactions and fusion with the nuclei 38' of atoms 38 of the transition metal, i.e. a step 151 of nuclear capture by atoms 38, as diagrammatically shown in Fig. 5, part. (d1). This causes a structural rearrangement that generates a new nucleus 42' of an element Me' 42, which is different from transition metal Me, and that causes a mass defect energy release Q₁. The energy that is generated is perceived in the form of heat, as it is diagrammatically shown in Fig. 5, part. (e1).

The useful metals, as described in WO2010058288, may be Sc, Ti, V, Cr, Mn, Fe, Co, Ni, Rb, Sr, Y, Zr, Nb, Mo, Tc, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Th, U, Pu and transuranic metals, an alloy or, more in general, a mixture of two or more than two of the above listed metals.

In particular, the transition metal is Nickel, which typically comprises the following isotopes (between parentheses the occurrences relative of each isotope): ⁵⁸Ni(68.1%), ⁶⁰Ni(26.2%), ⁶¹Ni(1.14%), ⁶²Ni(3.64%), ⁶⁴Ni(0.93%).

In the case of Nickel, the internal primary nuclear reactions of direct capture, as calculated taking into account the conservation of the spin and of the parity, as well as the Gamow coefficient, can be written:
- ¹H + ⁵⁸Ni-> ⁵⁹Cu + 3,417 MeV {1a}
- ¹H + ⁶⁰Ni-> ⁶¹Cu + 4.796 MeV {1b}
- ¹H + ⁶¹Ni-> ⁶²Cu + 5.866 MeV {1c}
- ¹H + ⁶²Ni-> ⁶³Cu + 6.122 MeV {1d}
- ¹H + ⁶⁴Ni-> ⁶⁵Cu + 7.453 MeV {1e}.

All the above-mentioned reactions have the same probability factor [0] and occur conserving the spin and the parity.

Alternatively, as Fig. 5, part. (d2), diagrammatically shows, protons ¹H 35' may undergo a step 152 of expulsion by Coulomb repulsion from nucleus 38' of the transition metal, and may give origin to protons 35" expelled from the respective nuclei where the orbital capture has occurred. More in detail, if the transformation of H⁻ ions 35 into protons ¹H 35' occurs at a distance larger than the distance that allows the capture, which is about 10⁻¹⁴ m, protons ¹H 35" are expelled due to the repulsive forces acting between protons ¹H 35' and nucleus 38' of transition metal 19. Expelled protons 35" have an energy of 6.7 MeV. This calculated value is experimentally confirmed by cloud chamber measurements.

A part of protons 35" expelled by Coulomb repulsion may interact with other nuclei 38' of the same clusters 21 in which protons 35" themselves have been formed, and/or can engage with nuclei of different clusters 21.

Another part of these high energy expelled protons 35", i.e. of protons 35" emitted by cluster structure 20 of transition metal 19, leave primary material 19 as emitted protons 35"', and may achieve secondary material 28, since the distance I between surface 23 is shorter than a predetermined maximum distance L. In this case, emitted protons 35"' can interact with secondary material 28 according to the delayed secondary, proton-dependent, nuclear reactions, which are associated to a further energy release Q₂. Heat Q₂. contributes to the overall energy generation Q₁ + Q₂ of the Process.

In an exemplary embodiment of the invention, secondary material 28 comprises Lithium. In nature, Lithium contains stable ⁷Li isotope, which is about 92.4%, and stable ⁶Li isotope, which is about 7.6%.

In the case of ⁶Li and ⁷Li isotopes, the proton-dependent reactions are the following:
- ¹H + ⁷Li -> ⁸Be(α) + 17.255 MeV {2a}
- ¹H + ⁷Li -> ⁴He + ⁴He + 17.347 MeV {2b}
- ¹H + ⁶Li -> ⁷Be + 5.606 MeV {3a}
- ¹H + ⁶Li -> ³He + ⁴He + 4.019 MeV {3b},
which have probability factors [0], [1], [0], [0], respectively. Reaction {2b} is the one which does not conserve the spin and the parity, whereas reaction {3b}, even if it has a favourable Gamow coefficient, does not conserve the spin and the parity. Briefly, the most energetically advantageous reactions are the ones that involve ⁷Li isotope, i.e. reactions {2a} and {2b}.

α particles (⁴He) that are generated according to the above-mentioned reactions may in turn cause nuclear reactions with ⁶Li e ⁷Li isotopes of Lithium itself, which produces further energy in the form of reaction heat:
- ⁴He + ⁶Li -> ¹⁰B + 4.460 MeV {4}
- ⁴He + ⁷Li -> ¹¹B + 8.665 MeV {5a}

Also in this case, the spin and the parity are conserved, and the Gamow coefficient is favourable.
- ⁷Li + ⁴He = ¹¹B + γ + 8.665 MeV {5b}.

Therefore, about 17 MeV are obtained for each reaction between Nickel and hydrogen which generates a proton ¹H that interacts with ⁷Li, while an average energy of 8 MeV would be obtained if the secondary material were not present. This sensibly increases the energy production rate of the method based on anharmonic stimulated fusion of H⁻ and a transition metal (FASEC), and the energy production rate of a device or reactor to protons based on such method.

In another exemplary embodiment of the invention, secondary material 28 comprises Boron. In nature, Boron contains the stable ¹¹B isotope, which is about 81.2% and stable isotope ¹⁰B which is about 19.8%. In this case, the proton-dependent reactions are the following:
- ¹H + ¹¹B -> ¹²C + 15.957 MeV {6a}
- ¹H + ¹¹B -> ⁴He + ⁸Be(α) + 8.590 MeV {6b}
- ¹H + ¹⁰B -> ¹¹C + 8.689 MeV {7a}
- ¹H + ¹⁰B -> ⁴He + ⁷Be + 1.145 MeV {7b},
where reactions {6b} and {7b} have a less favourable probability factor than the others reactions ([1] instead of [0]) and does not conserve the parity and the spin, even if they have a favourable Gamow coefficient.
α particles (⁴He) that are generated according to some of the above-mentioned reactions may in turn cause nuclear reactions with ¹⁰B:
- ⁴He + ¹¹B ->¹⁵N + 10.991 MeV {8a};
- ⁴He + ¹¹B→ n(β⁻) + ¹⁴N + 0.158 MeV {8b};
- ⁴He + ¹¹B→ ¹H + ¹⁴C(β⁻) + 0.784 MeV {8c};
- ⁴He + ¹⁰B → ¹⁴N + 11.612 MeV {9a};
- ⁴He + ¹⁰B → n(β⁻) + ¹³N (β⁺) + 1.059 MeV {9b};
- ⁴He + ¹⁰B→ ¹H + ¹³C + 4.062 MeV {9c};
- ⁴He + ¹⁰B→ ²H + ¹²C + 1.340 MeV {9d},
which are listed by decreasing probability, i.e. by increasing probability factors, from [0] (reactions {8a}, {8b}, {8c}), to [1] (reaction {9a}), to [2] (reactions {8a}, {8b}, {8c}). Reactions {8b}, {8c}, {9b}, {9c} does not conserve the parity and the spin even if they have a favourable Gamow coefficient, and the most energetically useful reaction is reaction {8a}.

Therefore, an energy amount of 9-16 MeV is obtained for each reaction between Nickel and hydrogen which generates a proton ¹H that interacts with Boron, while an average energy of about 8 MeV would be obtained if the secondary material were not present. This sensibly increases the energy production rate of the method based on anharmonic stimulated fusion of H⁻ and a transition metal (FASEC), and the energy production rate of a device or reactor to protons based on such method.

In a further exemplary embodiment of the invention, secondary material 28 comprises a transition metal, which may belong to both d-block and f-block of the periodic table, which includes of the lanthanoides and the actinoides. In particular if ²³²Th, ²³⁶U, or ²³⁹U are used, which are the ancestors of respective natural decay chains, or if ²³⁹Pu is used, which is the ancestor of an artificial decay chain, the proton-dependent reactions would be, respectively:

¹H + ²³²Th→ ²³³Pa(β⁻) + 5.249 MeV {10a}

¹H + ²³⁵U → ²³⁶Np(β⁻) + 4.833 MeV {10b}

¹H + ²³⁸U → ²³⁹Np(β⁻) + 5.287 MeV {10c}

¹H + ²³⁹Pu(α) → ²⁴⁰Am(β⁺) + 4.372 MeV {10d}.

Reaction {10a} has the most favourable probability factor, which is [0], and the other reaction have probability factor [1].

As said above, α particles that are generated according to reactions {2b}, {2d}, {4b}, {4d} may in turn cause α-dependent reactions with the metal of the primary material. For instance, if the primary material contains Nickel, the following reactions may take place:

⁴He + ⁵⁸Ni → ⁶²Zn(β⁺) + 3.369 MeV {11a}

⁴He + ⁶⁰Ni → ⁶⁴Zn + 3.952 MeV }{11 {11b

⁴He + ⁶¹Ni → ⁶⁵Zn(β⁺) + 4.116 MeV {11c}

⁴He + ⁶²Ni → ⁶⁶Zn + 4.579 MeV {11d}

⁴He + ⁶⁴Ni → ⁶⁸Zn + 5.333 MeV. {11e},

which are still useful to obtain energy. Such reactions conserve both the spin and the parity, and have a favourable Gamow coefficient. Reaction {11c} has a probability factor [0], which is the most favourable, while the other reactions have a probability factor [1].

Globally, steps 151 and 152 are associated with a step 160 (Fig. 1) of production and removal of heat 27, to be exploited by a user, not shown. This may be carried out by means of well-known fluid heat exchange devices.

As still shown in Fig. 1, step 160 of heat production and removal may be associated with a step 170 of regulating the thermal power that is produced. Such step 170 of adjusting is optional, and is therefore shown with dashed lies. According to the invention, step 170 of thermal power regulation comprises a step of adjusting the amount of secondary material 28, which is exposed, i.e. which can be attained by the protons 35"' of enough energy that are emitted by cluster structure 20 of transition metal 19, i.e. by active core 18. With reference to Figs. 2 and 4, this exposed amount is proportional to the portion of surface 29 of material 28 that can be attained by emitted protons ¹H 35"', i.e. it is proportional to the portion of surface 29 that is located within distance L from active core 18. Such distance L depends upon the length of the average free path that protons ¹H can travel before reverting to atomic hydrogen. With an energy of protons ¹H 35"/35"' of about to 6.7 MeV, the average free path is about 7.5 cm.

The number of reactions per time unit between protons ¹H 35"' and secondary material 28 changes responsive to the exposed amount of secondary material, in particular it changes substantially proportionally to the exposed surface of secondary material. For instance, it may range between zero, which is the case in which no surface of secondary material 28 is located within maximum distance L from active core 18, and a maximum value, which pertains to the maximum surface 29 of secondary material 28 that can be contained within maximum distance L from active core 18. Correspondingly, ceteris paribus, the heat generated changes substantially between minimum value Q₁, which is the heat generated by internal and external primary reactions, and a value Q₁ + Q₂, in which Q₂ is the contribution provided by the nuclear proton-dependent reactions which take place between emitted protons ¹H 35"' and secondary material 28, when the exposed surface of secondary material 28 is at a maximum.

In a possible exemplary embodiment of the invention, it is possible to increase or to decrease the portion of exposed secondary material, such that an increase or a decrease of thermal generated power is obtained, respectively.

Therefore the presence, proximate to the active core, of a material adapted to capture and to interact with protons of a predetermined energy may also serve for regulating thermal power supplied by a generator based on the anharmonic stimulated fusion of H⁻ and a transition metal (FASEC), besides increasing the capacity of the generator. More in detail, the secondary material allows adjusting thermal power at any power value set between:
- a minimum value Q₁, for example the value that corresponds to the sole production of energy from internal and external primary reactions, which take place within clusters 21 of primary material 19;
- a maximum value Q₁ + Q₂ that depends, in particular, upon the amount of secondary material 28 that can be reached by protons 35"' emitted by active core 18.

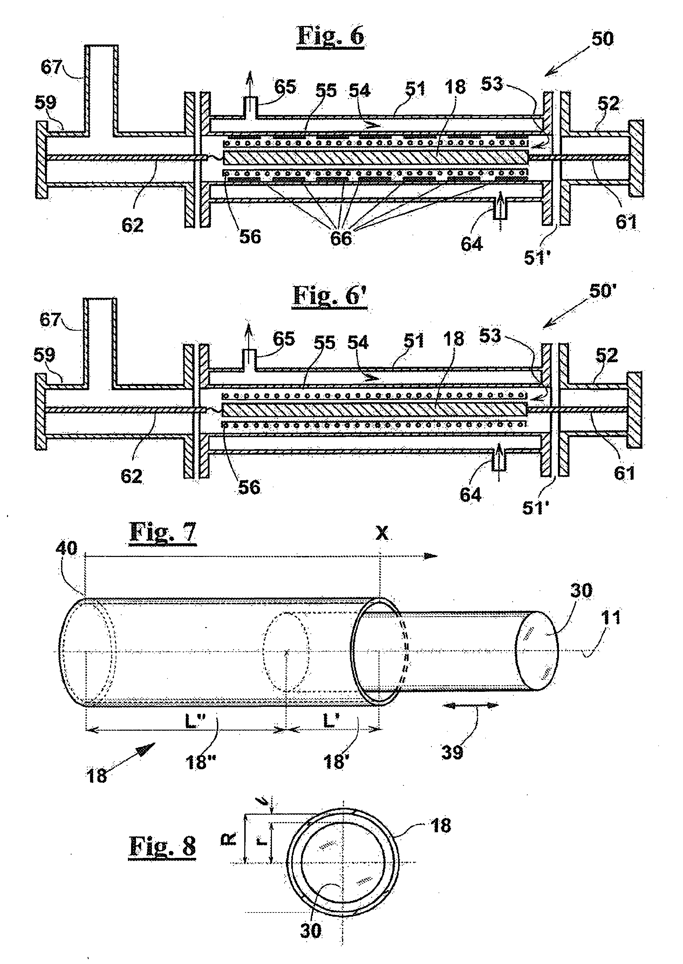

With reference to Fig. 6, an energy generator 50 is described according to an exemplary embodiment of the invention, in which active core 18 comprises:
- an amount of a primary material, comprising crystals of a transition metal in the form of micro-nanometric clusters, where the clusters have normally a number of atoms of the transition metal lower than a predetermined number of atoms;
- H- ions that are available for a subsequent step of orbital capture by the atoms of the transition metal.

In this exemplary embodiment, active core 18 has an elongated shape, preferably the shape of a cylinder or of a small bar. Active core 18 is arranged in a central position of an elongated generation chamber 53 that is defined by a heat transfer wall 55, for example by a cylindrical wall. A substantially annular heat transfer chamber 54 is formed out of heat transfer wall 55, and is in turn defined by a preferably cylindrical external wall 51. Heat transfer chamber 54 has an inlet port 64 and an outlet port 65 for a heat-exchange fluid, at opposite end portions of generation chamber 53. The heat-exchange fluid, not shown, in use withdraws the heat provided by the nuclear reactions. Generation chamber 53 is releasably closed at own ends by a first and by a second preferably cylindrical bonnets 52,59. The bonnets 52,59 are connected to generation chamber 53 by conventional connection means, for example by flanges 51'.

In the exemplary embodiment, as represented, a means is provided for preheating the active core, said means comprising an electric winding 56, which in use is connected to a voltage source, not shown, such that a predetermined current flows along winding 56. Winding 56 has such a size that the current develops a thermal power suitable for heating active core 18, in a determined and industrially acceptable time, from a first temperature, typically from room temperature, up to a second temperature or to an initial process temperature. The initial process temperature is higher than a determined critical temperature, which depends, in particular, upon the transition metal of the primary material.

Generator 50 also comprises a trigger means of the orbital capture process of the H- ions by the transition metal of active core 18. In the exemplary embodiment of Fig. 6, the trigger means comprises electrodes 61,62, which are arranged to impulsively apply an electric voltage at the end of active core 18. This way, an electric current pulse is created through an electrostrictive portion, not shown, of active core 18. In the depicted exemplary embodiment, electrodes 61,62 extend from bonnets 52,59, respectively, and have a means for supporting and keeping active core 18 at its position within generation chamber 53.

Figure 6 also diagrammatically show a trigger means 67 that may be provided in alternative or in addition to electrodes 61,62. Trigger means 67 is arranged to cast a laser pulse on the active core.

Furthermore, Generator 50 has small plates 66 that globally comprise a predetermined amount of a secondary material, and that are arranged on the inner face of heat transfer wall 55, which is a containing element of active core 18. As described above, the secondary material is a material adapted to capture protons having an energy at least equal to a predetermined energy threshold. In particular exemplary embodiments, the secondary material may be selected among Lithium, Boron, transition metals, in particular the latter selected among ²³²Th, ²³⁶U, ²³⁹U, ²³⁹Pu, or may be a combination of these materials.

As already described, the secondary material interacts with protons 35"' that are emitted by active core 18, according to nuclear proton-dependent reactions, which produce a heat amount Q₂ that is added to heat Q₁ generated due to the H- ions nuclear capture reactions by transition metal 19. The overall generated heat Q₁+Q₂ is preferably removed through heat transfer wall 55 by means of a heat-exchange fluid that flows along inside heat transfer chamber 54.

Small plates 66 are reversibly connected on the inner face of wall 55 which contains generation chamber 53. This way, it is possible to easily remove and replace small plates 66 when these are substantially exhausted, i.e. when the concentration of the secondary material in small plates 66 has decreased below a determined lower concentration threshold. Below this lower concentration threshold, the frequency of the reactions between the protons and the secondary material has decreased to such an extent that an industrially acceptable heat power cannot be delivered any longer. A conventional means can be used for fixing small plates 66 on wall 55. In particular grooves or housings can be made on the internal face of wall 55, in which small plates 66 are inserted. For the sake of clarity, in Fig. 6 small plates 66 are shown very far spaced apart, but they may be actually arranged adjacent to one another.

In an exemplary embodiment, not shown, the generation chamber containment wall of the generation chamber may have an inner coating comprising a layer of the secondary material. The layer of secondary material may be possibly restored after it has been exhausted, to begin a new cycle of reactor 50.

Fig. 6' shows a longitudinal cross section of a generator 50' according to another exemplary embodiment of the invention, in which containment wall 55 of the generation chamber is made of an alloy that at least superficially contains secondary material 19. For example, wall 55 can be made in an amorphous alloy of Boron and/or Lithium, as the secondary material, and of Fe or Ni as the structural material. The latter may be the alloy Fe/B 80/20%, or an alloy obtained by adding to this alloy another structural metal and/or another secondary metal.

Other parts of generators 50 and 50' (Figs. 6 and 6'), in particular containment and heat exchange wall 55, may be made of a transition metal. Preferably, such transition metal is a transition metal that is present in the active core 18. This prevents galvanic corrosion and allows a further production of energy, since the protons emitted by the core may interact with the transition metal of wall 55.

With reference to Fig. 7, an active core 18 is described according to an exemplary embodiment, which has the shape of a hollow body 40. In this case, a tubular body 40 comprises the primary material, i.e. the transition metal, and has a thickness that is very small with respect to the diameter. An elongated adjustment body 30 is slidingly housed within tubular body, in this case a cylindrical body 30, which comprises the secondary material. As described above, the secondary material is adapted to capture and to engage with high energy protons 35"' that are emitted by active core 18. In this case, a displacement means is provided, not shown, for causing a relative movement of active core 18 and of adjustment body 30. For instance, the displacement means can be configured for displacing adjustment body 30 within active core 18, along a longitudinal axis 11 of tubular body 18 and of cylindrical adjustment body 30. This way, it is possible to adjust the amount of secondary material of adjustment body 30 that is at a distance from active core 18 shorter than a predetermined maximum distance L. In other words, it is possible to adjust the amount of the secondary material that can be attained by the high energy protons emitted by active core 18, which is also indicated above as the exposed secondary material.

This way, with a predetermined relative movement of adjustment body 30 and of active core 18, a corresponding increase/decrease of the energy delivered by the generator can be obtained.

Fig. 8 is an elevation front view of tubular body 18 of the active core, which has an inner radius R, and of cylindrical adjustment body 30, which has a radius r. The width 1 of the annular interspace defined between active core 18 and cylindrical adjustment body 30, i.e. the distance between active core 18 and adjustment body 30, is shorter than or the same as a determined maximum distance, the latter depending upon the average free path that high energy protons 35"' emitted by active core 18 can travel before reverting to atomic hydrogen. Therefore (Fig. 7), when the adjustment body is located at a coordinate X with respect to one end 40 of active core 18, active core 18 is divided in:
- a portion 18', in which adjustment body 30 is inserted within tubular active core 18, and in which secondary material 28 is at a distance shorter than the predetermined maximum distance and can accordingly be attained by high energy protons 35"' emitted by the primary material of active core 18;
- a portion 18", in which adjustment body 30 is outside of the elongated recess of active core 18, and in which substantially all secondary material 28 is at a distance longer than the maximum distance L and cannot accordingly be attained by high energy protons 35 emitted, i.e. expelled by Coulomb repulsion from the nuclei of primary material 19 of active core 18. Therefore, a desired increase/decrease of the energy produced can be obtained by suitably increasing/decreasing the amount of exposed secondary material by a predetermined movement of adjustment body 30.

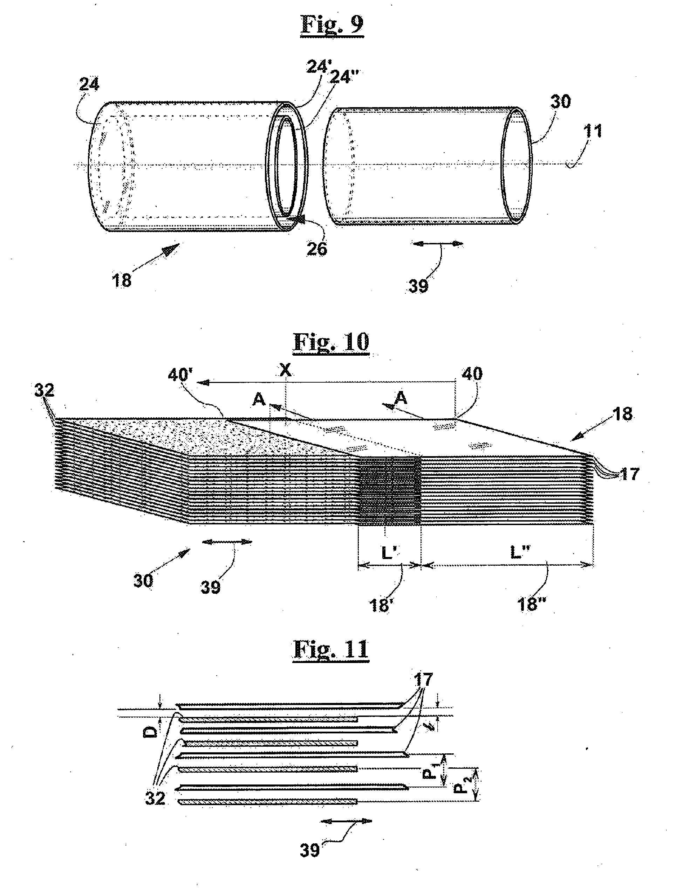

Fig. 9 diagrammatically shows an active core 18 according to another exemplary embodiment of the invention, where active core 18 comprises two primary elements consisting of a first tubular body 24' and of a second tubular body 24". Tubular bodies 24' and 24" are concentrically arranged about a longitudinal axis 11, and comprise an amount of transition metal 19. Tubular bodies 24' and 24" have a thickness that is very small with respect to their diameter. Tubular bodies 24' and 24" have a common basis 24 that may have the shape of a circle or of an annulus and that comprises a boundary portion of a plane cross section of second external tubular body 24". This way, first tubular body 24' and second tubular body 24" are connected to each other in a determined relative position. The relative position of two tubular bodies 24' and 24" can also be connected by a different mutual fixing means, for instance by a plurality of radial elements, not shown, set between two tubular bodies 24' and 24", and integral to both tubular bodies 24' and 24".

Fig. 9 also shows a secondary element consisting of an adjustment body, which in this exemplary embodiment is a tubular body 30, and is arranged to be slidingly inserted into interspace 26 between two tubular bodies 24' and 24" of active core 18. Adjustment body 30 comprises an amount of secondary material adapted to capture and to interact with high energy protons 35"' that are emitted by active core 18. A displacement means, not shown, is also provided for displacing adjustment body 30 within interspace 26. The displacement means allow adjusting the amount of exposed secondary material, i.e. the amount of the secondary material that can be attained by high energy protons 35'" emitted by active core 18. This way, by a predetermined relative movement of adjustment body 30 and of active core 18, a corresponding increase/decrease of the energy delivered by the generator can be obtained.

Obviously, the shape of Fig. 9 is only exemplary and not limitative, and can be generalized to the case, not shown, of a plurality of concentric primary tubular elements or bodies of active core 18 and of a plurality of concentric secondary tubular elements or bodies of adjustment body 18, the elements having respective diameters such that each tubular body or primary element can generally be placed between two tubular bodies or two secondary elements, and vice-versa.

Also the tubular shape, or the closed shape, can be generalized. Figs. 10 and 11 diagrammatically show an active core 18 and an adjustment body 30 that comprises a plurality of substantially plane primary elements 17, and a plurality of substantially plane secondary elements 32, respectively. In an exemplary embodiment, as shown, primary elements 17 and secondary elements 32 are primary and secondary laminas. In other words, primary elements 17 are laminas at least in part made of the primary material, i.e. made of the transition metal in the form of micro-nanometric clusters, whereas secondary elements 32 are laminas at least in part made of the secondary material. Laminas 17 and 32 may obviously have any shape, even a shape different from the rectangular shape that is shown in Fig. 10. If necessary, a stretch means, not shown, may be provided to keep laminas 17 and/or laminas 32 in a planar configuration. For example, the stretch means may comprise stiff frames or other stiffening elements. Primary laminas 17 are preferably integral to one another, as well as secondary laminas 32. Laminas 17 and 32 are arranged in such a way that each primary lamina 17 slidingly interposes between two secondary laminas 32, and that each secondary lamina 32 slidingly interposes between two primary laminas 17, of course, apart from side primary laminas and/or side secondary laminas of the two pluralities. In other words, primary laminas 17 of active core 18 and secondary laminas 32 of adjustment body 30 are at least in part interfolded. Pitch P₁ between primary laminas 17 is preferably the same for all primary laminas 17 and/or is preferably the same as pitch P₂ between secondary laminas 32, which is also preferably the same for all secondary laminas 32. Distance 1 between at least one portion of each secondary lamina 17 and corresponding portions of closest secondary laminas 32, as well as the distance between at least one portion of each secondary lamina 32 and corresponding portions of closest primary laminas 17 is approximately one half pitch P of the primary laminas and of the secondary laminas, minus the halves of the thicknesses of laminas 17 and 32. Distance 1 is shorter than predetermined maximum distance L, beyond which high energy protons emitted from primary laminas 17 cannot achieve the secondary material of secondary laminas 32 before reverting to atomic hydrogen.

In an exemplary embodiment, an adjustment means is also provided which comprises a relative slide means for causing a relative slide movement between primary laminas 17 and secondary laminas 32, along a direction that is indicated by arrow 39 and is parallel to both parallel primary laminas 17 and secondary laminas 32.

As shown still in Fig. 10, when adjustment body 30 is located at a coordinate X with respect to one end 40 of active core 18, active core 18 is divided into a portion 18', in which laminas 32 of adjustment body 30 are facing the closest primary laminas of active core 18 and are located at a distance I, and into a portion 18", in which, apart from a small zone proximate to portion 18', the distance between primary laminas 17 and secondary laminas 32 that face primary laminas 17, and vice-versa, is larger than a maximum distance L. In portion 18", the reactions between high energy protons 35"' emitted by the primary material of active core 18 and the secondary material of adjustment body 30 cannot therefore take place.

The relative slide means, not shown, allow adjusting the mutual extension of the portions 18' and 18". In other words, they allow integrally adjusting respective surface portions of each secondary element 32 that faces the closest primary elements 17. This way, it is possible to adjust the amount of secondary material exposed to protons 35"' that are emitted by the primary material of closest primary elements 17, i.e. the amount of the secondary material that can be reached by protons 35"' that are emitted by the clusters of the primary material. Therefore, it is possible to adjust the proton-dependent secondary reactions that occur per time unit between the emitted protons and the secondary material. Accordingly, it is possible to adjust the power delivered by the generator.

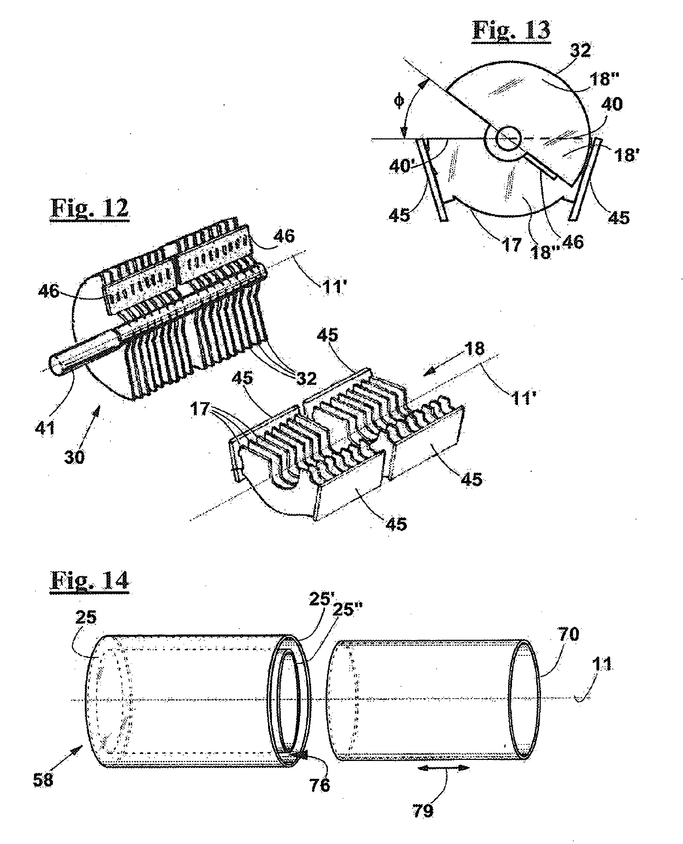

Fig. 12 diagrammatically shows an active core 18 and an adjustment body 30 that comprise a plurality of substantially plane primary elements 17, and a plurality of substantially plane secondary elements 32, respectively, in the form of primary laminas 17 and of secondary laminas 32, which are at least in part made of the primary material and of the secondary material, respectively. Laminas 17 and 32 may obviously have any shape, but the circular sector shape of Fig. 12 is preferred. A stretch means, for example of the type indicated when describing Fig. 10, may be provided to keep primary laminas 17 and/or secondary laminas 32 in a planar configuration. Moreover, in the exemplary embodiment of Fig. 12, mutual fastening elements 45 and 46 are provided for primary laminas 17 and for secondary laminas 32, respectively. This way, primary laminas 17 are integral to one another, as well as secondary laminas 32. Laminas 17 and 32 are arranged in such a way that each primary lamina 17 slidingly interposes between two secondary laminas 32, and that each secondary lamina 32 slidingly interposes between two primary laminas 17. Even in this case, pitches P₁ and P₂ between primary laminas 17 and secondary laminas 32, respectively, are preferably the same pitch for each primary lamina 17 and for each primary lamina 32, respectively, and/or they are preferably equal to a pitch P common to primary laminas 17 and to secondary laminas 32. Distance 1 between at least one portion of each secondary lamina 17 and corresponding portions of closest secondary laminas 32, as well as the distance between at least one portion of each secondary lamina 32 and corresponding portions the closest primary laminas 17 is about one half the common pitch P, minus the halves of the thicknesses of laminas 17 and 32. Distance I is shorter than predetermined maximum distance L.

In a possible exemplary embodiment, adjustment means is also provided which comprise a relative rotation means between primary laminas 17 and secondary laminar 32, about a common rotation axis 11'.

As shown in Fig. 13, when adjustment body 30 is located at an angular coordinate ϕ with respect to one end 40 of active core 18, active core 18 is divided into a portion 18', in which laminas 32 of adjustment body 30 face closest primary laminas 17 of active core 18 and are located at a distance I, and into a portion 18", in which the distance between primary laminas 17 and closest secondary laminas 32, and vice-versa, is generally longer than a maximum distance L. In portion 18", the reactions between high energy protons 35"' emitted by the primary material of active core 18 and the secondary material of adjustment body 30 cannot therefore take place.

The relative rotation means may comprise a motor means, not shown, which act on a shaft 41, on which secondary laminas 32 are keyed. The relative rotation means allows adjusting the mutual extension of the portions 18' and 18", adjusting the amount of secondary material exposed to protons 35'" emitted by the primary material of the closest primary laminas 17. This way, it is possible to adjust the secondary reactions that occur per time unit between emitted protons 35"' and the secondary material, and it is therefore possible to adjust the power generated by the generator.

Fig. 14 diagrammatically shows an elementary generation cell 58 of a device according to a further exemplary embodiment of the invention, wherein a primary element 25' and a secondary element 25" are provided which have the shape of tubular bodies. The primary element 25' comprises cluster nanostructures of a transition metal, and the secondary element 25" has an amount of a secondary metal on its own external surface, therefore the secondary material faces the primary element 25'. Tubular bodies 25', 25" are concentrically arranged about a longitudinal axis 11, and have a thickness that is very small with respect to the diameter. Tubular bodies 25' and 25" have a common basis 25 that may have the shape of a circle or of an annulus and that comprises a boundary portion of a plane cross section of second external tubular body 25". This way, first tubular body 25' and second tubular body 25" are connected to each other at a determined relative position. The relative position of two tubular bodies 25' and 25" can also be fixed by a different mutual fixing means, for instance by a plurality of radial elements, not shown, interposed between two tubular bodies 25' and 25" and integral to both tubular bodies 25' and 25".

Fig. 14 also shows an adjustment element 70 that, in this exemplary embodiment, is a shield body of tubular shape, which is arranged to be slidingly inserted into the interspace 76 between two tubular bodies 25' and 25". Shield body 70 is made of a material and with a thickness suitable for blocking the protons that are emitted by the clusters of the primary material of primary tubular body 25'. A displacement means, not shown, is also provided for displacing shield body 70 within interspace 26. This displacement means allows adjusting the amount of the exposed secondary material, i.e. the amount of the secondary material that can be attained by protons 35"' emitted by the clusters of the transition metal of primary tubular body 25'. This way, with a predetermined relative movement of adjustment shield body 70, on the one hand, and of tubular bodies 25' and 25", on the other hand, a corresponding increase/decrease of the energy delivered by the generator can be obtained.

The arrangement of Fig. 14 can be obviously generalized to the case, not shown, of a plurality of concentric elementary cells and of a plurality of concentric adjusting tubular elements or bodies, which have respective diameters such that each tubular adjustment body 70 generally interposes between two tubular bodies 25' and 25", which are a primary tubular body and a secondary tubular body, respectively, of an elementary generation cell of the generator.

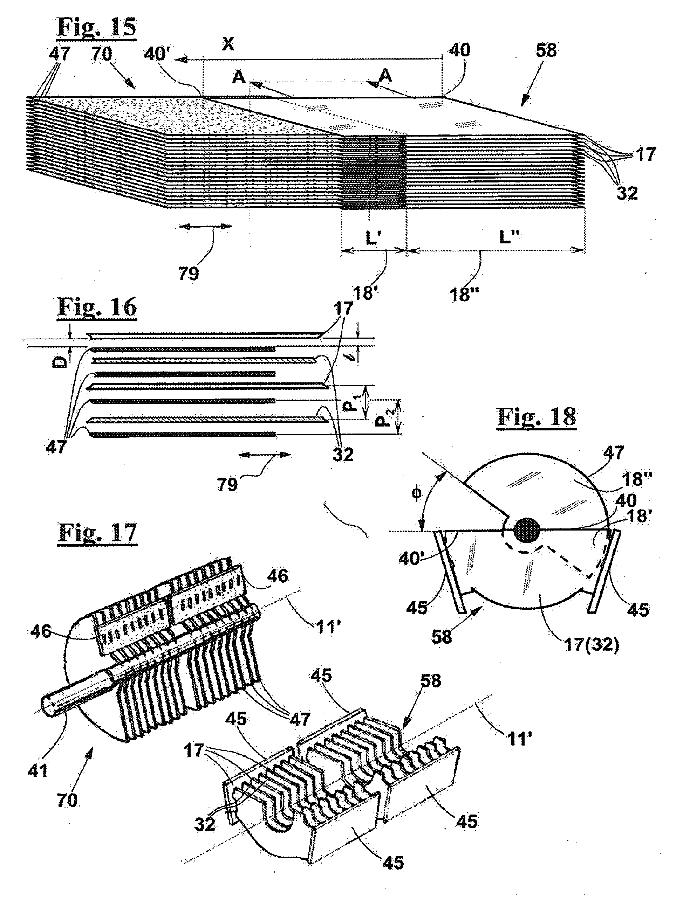

Figs. 15 and 16 diagrammatically show a generation cell 58 of a generator according to another exemplary embodiment of the invention, in which a plurality of substantially plane primary elements 17, and a plurality of substantially plane secondary elements 32 are provided. Each primary element 17 is arranged between two secondary elements 32, and vice-versa, obviously apart from the primary or secondary side elements of generation cell 58. Primary elements 17 and secondary elements 32 are primary and secondary laminas. Primary laminas 17 comprise cluster nanostructures of the primary material, which are arranged on its own surface, whereas secondary laminas 32 have the secondary material on its own surface, which therefore faces adjacent primary elements 17. Laminas 17 and 32 may obviously have any shape, which may be also different from the rectangular shape shown in Fig. 15. If necessary, a stretch means, not shown, may be provided to keep laminas 17 and/or laminas 32 in a planar configuration. For example, the stretch means may comprise stiff frames or other stiffening elements. Primary laminas 17 and secondary laminas 32 are preferably arranged integral to one another. The generator also comprises an adjustment body 70 consisting of a plurality of plane adjustment elements 47 i.e. a plurality of shield laminas 47. Adjustment shield laminas 47 are made of a material and with a thickness suitable for blocking the protons that are emitted by the clusters of the primary material of primary laminas 17. Laminas 17, 32 and 47 are arranged in such a way that each adjustment lamina 47 slidingly interposes between a primary lamina 17 and a secondary lamina 32. Pitch P₃ between primary and secondary laminas 17 and 32 is preferably the same for each primary and secondary laminas 17 and 32 and/or is preferably the same as pitch P₄ between adjustment laminas 47, which is also preferably the same for all adjustment laminas 47. Pitch P₃ is shorter than predetermined maximum distance L beyond which protons 35"' that are emitted by the primary material of primary laminas 17 cannot achieve the secondary material of secondary laminas 32 before reverting to atomic hydrogen.

In an exemplary embodiment, an adjustment means is also provided which comprises a relative slide means for causing a relative slide movement between adjustment laminas 47, on one hand, and primary and secondary laminas 17,32, on the other hand, along a direction that is indicated by arrow 79 and is parallel to primary, secondary and adjustment laminas 17, 32, 47 of generation cell 58.

When the adjustment shield body 70 is located at a coordinate X with respect to a position of minimum exposition 40 of active core 18, active core 18 is divided into a portion 18', in which laminas 32 are facing primary laminas 17, and into a portion 18", in which, apart from a small zone proximate to portion 18', laminas 32 are shielded with respect to primary laminas 17. In portion 18" the proton-dependent reactions between protons 35"' emitted by the primary material of primary laminas 17 and the secondary material of secondary laminas 32 cannot therefore take place.

The relative slide means, not shown, allow adjusting the mutual extension of the portions 18' and 18". In other words, they allow integrally adjusting respective surface portions of each secondary element 32 that faces closest primary elements 17. This way, it is possible to adjust the amount of secondary material exposed to protons 35"' that are emitted by the primary material of primary elements 17, i.e. the amount of the secondary material that can be attained by protons 35'" that are emitted by the clusters of the primary material. Therefore, it is possible to adjust the proton-dependent secondary reactions that occur per time unit between the emitted protons and the secondary material. Accordingly, it is possible to adjust thermal power delivered by the generator.

Fig. 17 diagrammatically shows a generation cell 58 of a generator according to a further exemplary embodiment of the invention, in which a plurality of substantially plane primary elements 17, and a plurality of substantially plane secondary elements 32 are provided. Primary elements 17 and secondary elements 32 have the shape of primary laminas 17 and of secondary laminas 32, respectively. Each primary element 17 is arranged between two secondary elements 32, and vice-versa, of course apart from the primary or secondary side elements of generation cell 58. Primary laminas 17 comprise cluster nanostructures of the primary material, which are arranged on its own surface, whereas secondary laminas 32 have the secondary material on their own surfaces, therefore the secondary material faces the adjacent primary elements 25'. Moreover, in an exemplary embodiment, as depicted mutual fixing elements 45 are provided for fixing primary and secondary laminas 17 and 32 to one another, and mutual fixing elements 46 for fixing adjustment laminas 47 to one another. Primary and secondary laminas 17 and 32 are therefore integral to one another, as well as adjustment laminas 47. Primary and secondary laminas 17 and 32, and adjustment laminas 47 of shield body 70 are arranged in such a way that each adjustment lamina 47 slidingly interposes between a primary lamina 17 and a secondary lamina 32. Pitch P₃ between primary and secondary laminas 17 and 32 is preferably the same for each primary and secondary laminas 17 and 32 and/or is preferably the same as pitch P₄ between adjustment laminas 47, which is also preferably the same for all adjustment laminas 47. Pitch P₃ is shorter than predetermined maximum distance L.

In an exemplary embodiment, an adjustment means is also provided which comprises a relative rotation means for causing a rotation between the adjustment body 70, on one hand, and primary laminas and secondary laminas 17,32 of generation cell 58, on the other hand, about a common rotation axis 11'.

As shown in Fig. 18, when the adjustment shield body 70 is located at an angular coordinate ϕ with respect to one end of minimum exposition 40, generation cell 58 is divided into a portion 18', in which secondary laminas 32 are facing i.e. can be seen from primary laminas 17, and into a portion 18", in which secondary laminas 32 are shielded by adjustment shield body 70 with respect to primary laminas 17. In portion 18" the proton-dependent reactions between protons 35"' emitted by the primary material of primary laminas 17 and the secondary material of secondary laminas 32 cannot therefore take place.

The relative rotation means may comprise a motor means, not shown, which act on a shaft 41, on which adjustment laminas 47 are keyed. The relative rotation means allow adjusting the mutual extension of portions 18' and 18", adjusting the amount of secondary material exposed to protons 35"' emitted by the primary material of closest primary laminas 17. This way, it is possible to adjust the secondary reactions that occur per time unit between emitted protons 35"' and the secondary material, and it is therefore possible to adjust the generated power by the generator.

The foregoing description of exemplary embodiments of the method and of the generator according to the invention, and of the way of using the generator, will so fully reveal the invention according to the appended claims, so that others, by applying current knowledge, will be able to modify and/or adapt in various applications this specific exemplary embodiments without further research and without parting from the invention, and, then it is meant that such adaptations and modifications will have to be considered as equivalent to the specific embodiments. The means and the materials to realise the different functions described herein could have a different nature without, for this reason, departing from the scope of the invention. It is meant that the expressions or the terminology used have object purely descriptive and, for this, not limitative.

## Claims

1. A method to obtain energy by nuclear reactions between hydrogen (31) and a transition metal, said method including the steps of:
- prearranging (110) a primary material (19) comprising a predetermined amount of cluster nanostructures (21) having a number of atoms (38) of said transition metal lower than a predetermined number of atoms;
- keeping said hydrogen (31) in contact with said clusters (21);
- heating (130) said primary material (19) at an initial process temperature (T₁) higher than a predetermined critical temperature;
- dissociation of H₂ molecules of said hydrogen (31) and formation of H- ions (35) as a consequence of said step of heating;
- impulsively acting (140) on said primary material (19);
- orbital capture (150) of said H- ions (35) by said cluster nanostructures (21) as a consequence of said step (140) of impulsively acting;
- capture (151) of said H- ions (35) by said atoms (38) of said clusters (21), generating a thermal power as a primary reaction heat (Q₁);
removing (160) said thermal power, maintaining the temperature of the primary material (19) above said critical temperature,
**characterised in that**
it provides a step (115) of prearranging an amount of a secondary material (28) that faces said primary material (19) and within a predetermined maximum distance (L) from said primary material (19), said secondary material (28) arranged to interact with protons (35"') emitted from said primary material (19) by energy-releasing proton-dependent nuclear reactions that occur with a release of further thermal power in the form of a secondary reaction heat (Q₂), such that said step of removing (160) comprises said generated thermal power as said primary reaction heat (Q₁) and said secondary reaction heat (Q₂).

2. A method according to claim 1, wherein said secondary material (28) comprises Lithium, in particular said Lithium comprising predetermined fractions of ⁶Li and ⁷Li isotopes.

3. A method according to claim 1, wherein said secondary material (28) comprises Boron, in particular Boron comprising predetermined fractions of ¹⁰B and ¹¹B isotopes.

4. A method according to claim 1, wherein said secondary material (28) is a transition metal.

5. A method according to claim 1, wherein said secondary material (28) is selected from the group consisting of: ²³²Th, ²³⁶U, ²³⁹U, ²³⁹Pu.

6. A method according to claim 1, wherein a step is provided of adjusting (170) the generated thermal power, comprising a step of changing said amount of said secondary material (28) that faces said primary material (19) and is arranged within said predetermined maximum distance (L) and is therefore exposed to said protons (35"') emitted from said primary material (19).

7. A method according to claim 1, wherein said step of changing said amount of secondary material (28) exposed to said emitted protons (35"') comprises a step of moving an adjustment body (30,70) movable between a first position (40) and a second position (40'), corresponding to a maximum exposition and to a minimum exposition of said secondary material (28) on said primary material (19), respectively.

8. An energy generator (50) by nuclear reactions between hydrogen (31) and a transition metal, said generator (50) comprising:
- an active core (18) that include a predetermined amount of a primary material (19) comprising cluster nanostructures (21) having a number of atoms (38) of said transition metal lower than a predetermined maximum number of atoms;
- a generation chamber (53) containing said active core (18) and arranged to contain said hydrogen (31) to provide a contact of said hydrogen (31) with said clusters (21);
- a heating means for heating said active core (18) in said generation chamber (53) up to an initial process temperature (T₁) higher than a predetermined critical temperature, said process initial temperature suitable for causing a dissociation of H₂ molecules of said hydrogen (31) and a formation of H- ions (35);
- a trigger means (61,62,67) for creating an impulsive action (140) on said active core (18), said impulsively action (140) suitable for causing an orbital capture (150) of said H⁻ ions (35) by said cluster crystalline structure , and then a step of capture (151) of said H- ions (35) by said atoms (38) of said clusters (21), thus generating a primary reaction heat (Q₁);
- a heat removal means (54) for removing a thermal power from said generation chamber (53) and for maintaining the temperature of said active core (18) above said critical temperature while said thermal power is removed,
**characterised in that** it comprises, within a predetermined maximum distance (L) from said primary material (19), an amount of a secondary material (28) arranged to interact with protons of energy higher than a predetermined energy threshold, such that protons emitted by said orbital capture (150) of said H- ions (35) causes nuclear secondary energy-releasing reactions that occur with a release of a secondary reaction heat (Q₂), and the heat removal means (54) can remove a thermal power that comprises said primary reaction heat (Q₁) and said secondary reaction heat (Q₂).

9. An energy generator (50) according to claim 8, wherein said secondary material (28), which is arranged to capture and to engage with said emitted protons (35"'), is selected from the group consisting of: Lithium, Boron and a transition metal.

10. An energy generator (50) according to claim 8, that is provided with a secondary element, i.e. with a solid body that includes said secondary material, wherein said secondary element comprises a metal in an amorphous state, in particular an alloy of a plurality of metals in the amorphous state, comprising:
- a structural metal;
- said secondary material, selected from the group consisting of: Boron and Lithium,
in particular said structural metal is selected from the group consisting of: iron, Nickel, a combination of Fe and Ni.

11. An energy generator (50) according to claim 10, wherein said secondary element is obtained by the steps of:
- prearranging an amount of said metal in the molten state, at a predetermined temperature and according to a prefixed shape;
- cooling said molten metal into said shape with a cooling speed high enough such that said molten metal hardens maintaining the amorphous state.
in particular, said step of prearranging comprises a step of injection moulding.

12. An energy generator (50) according to claim 8, wherein said secondary element (66) forms a portion of a containing element (55) of said active core (18),
in particular said containing element (55) comprises an alloy of a transition metal and of said secondary material.

13. An energy generator according to claim 8, wherein said active core (18) comprises a plurality of substantially plane primary elements (17) that are at least in part made of said primary material (19), and a plurality of substantially plane secondary elements (32) is provided that are at least in part made of said secondary material (28), wherein said primary elements (17) and said secondary elements (32) are advantageously arranged such that each primary element (17) interposes between two secondary elements (32), and that each secondary element (32) interposes between two primary elements (17),
in particular said substantially plane primary elements comprise primary laminas (17) that are at least in part made of said primary material (19).
in particular said substantially plane secondary elements comprise secondary laminas (32) that are at least in part made of said secondary material (28).
in particular said primary elements (17) and/or said secondary elements (32) comprise a support (22) and a coating of said support (22), respectively made of said primary material (19) or of said secondary material (28).

14. An energy generator according to claim 8, comprising an adjustment means for adjusting the generated heat, said adjustment means comprising a means for changing said amount of said secondary material (28) that faces said primary material (19) and that is arranged within said predetermined maximum distance (L).
in particular said adjustment means comprises:
- an adjustment body (30,70);
- a means for displacing said adjustment body (30,70) within said generation chamber (53) with respect to said primary material (19) between a first position (40) and a second position (40') corresponding to a maximum exposition and to a minimum exposition of said secondary material (28) on said primary material (19), respectively,
said adjustment body (30,70) being selected from the group consisting of:
- a shield body (70) arranged between said primary material (19) and said secondary material (28);
- a support body (30) of said secondary material (28) arranged near said primary material (19).
in particular said primary material (19) is arranged between said active core (18) and a containing element (55) that contains said primary active core (18), or arranged between adjacent primary elements (17) of said active core (18).

15. An energy generator according to claims 13 and 14, wherein said adjustment body (30,70) comprises a plurality of substantially plane adjustment elements (32,47) integral to one another, which are arranged such that each adjustment element (32,47) slidingly interposes between two primary elements (17) or between a primary element (17) and a secondary element (32) according to whether said adjustment body (30,70) is a support body (30) or is a shield body (70), and said means for displacing said adjustment body (30,70) is adapted to provide a relative slide movement (39,79) between said adjustment elements (32,47) and said primary elements (17) and/or secondary elements (32) reciprocally interposed to each other, according to a common plane parallel to both said substantially plane primary elements (17) and/or said substantially plane secondary elements (32) and to said substantially plane adjustment elements (32,47), in order to integrally adjust respective surface portions (18') of each secondary element (32) facing said primary elements (17).
in particular, said adjustment means comprises a means selected from the group consisting of:
- a relative rotation means of said plurality of adjustment elements (17) and of said plurality of primary and/or secondary elements (32) about a rotation axis of said generator (50);
- a relative translation means of said plurality of adjustment elements (32,47) and of said plurality of primary elements (17) and/or secondary (32) according to a direction of said common plane of said adjustment elements (32,47) and of said primary elements (17) and/or secondary elements (32).

## Patentansprüche

1. Verfahren zum Erhalt von Energie durch nukleare Reaktionen zwischen Wasserstoff (31) und einem Übergangsmetall, wobei besagtes Verfahren die folgenden Schritte umfasst:
- Bestimmen (110) eines Primärmaterials (19), umfassend eine zuvor festgelegte Menge an Cluster-Nanostrukturen (21) mit einer Anzahl von Atomen (38) des besagten Übergangsmetalls, die geringer als eine zuvor festgelegte Anzahl an Atomen ist;
- Aufrechterhalten des Kontakts zwischen dem besagten Wasserstoff (31) und den besagten Clustern (21);
- Erwärmen (130) des besagten Primärmaterials (19) bei einer Anfangsprozesstemperatur (T₁), die höher als eine zuvor festgelegte kritische Temperatur ist;
- Dissoziation der H₂-Moleküle des besagten Wasserstoffs (31) und Bildung von H-Ionen (35) als Folge des besagten Schritts des Erwärmens;
- Impulsives Einwirken (140) auf besagtes Primärmaterial (19);
- Orbitales Einfangen (150) der besagten H-Ionen (35) durch besagte Cluster-Nanostrukturen (21) als Folge des besagten Schrittes (140) des impulsiven Einwirkens;
- Einfangen (151) der besagten H-Ionen (35) durch besagte Atome (38) der besagten Cluster (21), wodurch eine Wärmeenergie als Primärreaktionswärme (Q₁) erzeugt wird;
Abfuhr (160) der besagten Wärmeenergie, Aufrechterhalten der Temperatur des Primärmaterials (19) oberhalb der besagten kritischen Temperatur,
**dadurch gekennzeichnet, dass**
ein Schritt (115) des Bestimmens einer Menge eines Sekundärmaterials (28), das dem besagten Primärmaterial (19) gegenüberliegt und innerhalb eines zuvor festgelegten Höchstabstands (L) vom besagten Primärmaterial (19) liegt, geboten wird, wobei besagtes Sekundärmaterial (28) so angeordnet ist, dass es mit von besagtem Primärmaterial (19) durch Energie freisetzende protonenabhängige Nuklearreaktionen, die mit einer Freisetzung weiterer Wärmeenergie in Form einer Sekundärreaktionswärme (Q₂) auftreten, emittierten Protonen (35"') interagiert, sodass besagter Schritt des Beseitigens (160) die besagte erzeugte Wärmeenergie als besagte Primärreaktionswärme (Q₁) und besagte Sekundärreaktionswärme (Q₂) umfasst.

2. Verfahren nach Anspruch 1, wobei das besagte Sekundärmaterial (28) Lithium umfasst, wobei insbesondere besagtes Lithium zuvor festgelegte Fraktionen von ⁶Li- und ⁷Li-Isotopen umfasst.

3. Verfahren nach Anspruch 1, wobei das besagte Sekundärmaterial (28) Bor umfasst, insbesondere Bor, das zuvor festgelegte Fraktionen von ¹⁰B- und ¹¹B-Isotopen umfasst.

4. Verfahren nach Anspruch 1, wobei das besagte Sekundärmaterial (28) ein Übergangsmetall ist.

5. Verfahren nach Anspruch 1, wobei das besagte Sekundärmaterial (28) aus der aus Folgendem bestehenden Gruppe gewählt wird: ²³²Th, ²³⁶U, ²³⁹U, ²³⁹Pu.

6. Verfahren nach Anspruch 1, wobei ein Schritt der Anpassung (170) der erzeugten Wärmeenergie bereitgestellt wird, umfassend einen Schritt der Änderung der besagten Menge des besagten Sekundärmaterials (28), das dem besagten Primärmaterial (19) gegenüberliegt und innerhalb des besagten zuvor festgelegten Höchstabstands (L) angeordnet ist und daher den besagten Protonen (35"'), die von dem besagten Primärmaterial (19) emittiert werden, ausgesetzt ist.

7. Verfahren nach Anspruch 1, wobei der besagte Schritt der Änderung der besagten Menge des Sekundärmaterials (28), das den besagten emittierten Protonen (35"') ausgesetzt ist, einen Schritt des Bewegens eines Anpassungskörpers (30, 70), der zwischen einer ersten Position (40) und einer zweiten Position (40') bewegt werden kann, umfasst, entsprechend jeweils einer maximalen Exposition und einer minimalen Exposition des besagten Sekundärmaterials (28) auf dem besagten Primärmaterial (19).

8. Energieerzeuger (50) durch nukleare Reaktionen zwischen Wasserstoff (31) und einem Übergangsmetall, wobei der besagte Erzeuger (50) Folgendes umfasst:
- einen aktiven Kern (18), der eine zuvor festgelegte Menge eines Primärmaterials (19) umfasst, das Cluster-Nanostrukturen (21) mit einer Anzahl an Atomen (38) des besagten Übergangsmetalls, die niedriger als eine zuvor festgelegte maximale Anzahl an Atomen ist, beinhaltet;
- eine Erzeugungskammer (53), die den besagten aktiven Kern (18) enthält und so angeordnet ist, dass sie den besagten Wasserstoff (31) enthält, um einen Kontakt des besagten Wasserstoffs (31) mit den besagten Clustern (21) zu ermöglichen;
- ein Heizmedium zum Erwärmen des besagten aktiven Kerns (18) in der besagten Erzeugungskammer (53) bis zu einer Anfangsprozesstemperatur (T₁), die höher als eine zuvor festgelegte kritische Temperatur ist, wobei die besagte Anfangsprozesstemperatur geeignet ist, um eine Dissoziation von H₂-Molekülen des besagten Wasserstoffs (31) und eine Bildung von H-Ionen (35) zu verursachen;
- ein Triggermittel (61, 62, 67) zum Erzeugen einer impulsiven Handlung (140) auf besagtem aktiven Kern (18), wobei die besagte impulsive Handlung (140) geeignet ist, um ein orbitales Einfangen (150) der besagten H-Ionen (35) durch besagte Cluster-Kristallstruktur und dann einen Schritt des Einfangens (151) der besagten H-Ionen (35) durch besagte Atome (38) des besagten Clusters (21) zu verursachen und dadurch eine Primärreaktionswäme (Q₁) zu erzeugen;
- ein Wärmeabfuhrmittel (54) zur Abfuhr einer Wärmeenergie aus besagter Erzeugungskammer (53) und zum Aufrechterhalten der Temperatur des besagten aktiven Kerns (18) über der besagten kritischen Temperatur, während die besagte Wärmeenergie abgeführt wird,
**dadurch gekennzeichnet, dass** er innerhalb eines zuvor festgelegten Höchstabstands (L) von besagtem Primärmaterial (19) eine Menge eines Sekundärmaterials (28) umfasst, das so angeordnet ist, dass es mit Protonen einer Energie, die höher als eine zuvor festgelegte Energieschwelle ist, interagiert, sodass durch das besagte orbitale Einfangen (150) von besagten H-Ionen (35) emittierte Protonen nukleare sekundäre Energie freisetzende Reaktionen verursachen, die bei einer Freisetzung einer Sekundärreaktionswärme (Q₂) auftreten, und das Wärmeabfuhrmittel (54) eine Wärmeenergie abführen kann, die die besagte Primärreaktionswärme (Q₁) und die besagte Sekundärreaktionswärme (Q₂) umfasst.

9. Energieerzeuger (50) nach Anspruch 8, wobei besagtes Sekundärmaterial (28), das so angeordnet ist, dass es die besagten emittierten Protonen (35"') einfängt und diese erfasst, aus der aus Folgendem bestehenden Gruppe gewählt wird: Lithium, Bor und einem Übergangsmetall.

10. Energieerzeuger (50) nach Anspruch 8, der mit einem Sekundärelement zur Verfügung gestellt wird, d. h. mit einem Festkörper, der besagtes Sekundärmaterial umfasst, wobei das besagte Sekundärelement ein Metall in amorphem Zustand umfasst, insbesondere eine Legierung einer Vielzahl von Metallen in amorphem Zustand, umfassend:
- ein Strukturmetall;
- besagtes Sekundärmaterial, ausgewählt aus der aus Folgendem bestehenden Gruppe: Bor und Lithium,
wobei besagtes Strukturmetall insbesondere aus der aus Folgendem bestehenden Gruppe ausgewählt wird: Eisen, Nickel, einer Kombination aus Fe und Ni.

11. Energieerzeuger (50) nach Anspruch 10, wobei das besagte Sekundärelement durch die folgenden Schritte erhalten wird:
- Bestimmen einer Menge des besagten Metalls in geschmolzenem Zustand, bei einer zuvor festgelegten Temperatur und gemäß einer zuvor festgelegten Form;
- Abkühlen des besagten geschmolzenen Metalls in besagte Form bei einer Kühlgeschwindigkeit, die hoch genug ist, dass das besagte geschmolzene Metall beim Härten den amorphen Zustand beibehält.
wobei der besagte Schritt des Vorbereitens insbesondere einen Schritt des Spritzgießens umfasst.

12. Energieerzeuger (50) nach Anspruch 8, wobei das besagte Sekundärelement (66) einen Teil eines enthaltenden Elements (55) des besagten aktiven Kerns (18) bildet,
wobei das besagte enthaltende Element (55) insbesondere eine Legierung eines Übergangsmetalls und des besagten Sekundärmaterials umfasst.

13. Energieerzeuger nach Anspruch 8, wobei besagter aktiver Kern (18) eine Vielzahl von im Wesentlichen ebenen Primärelementen (17) umfasst, die zumindest teilweise aus besagtem Primärmaterial (19) hergestellt sind, und eine Vielzahl von im Wesentlichen ebenen Sekundärelementen (32) zur Verfügung gestellt wird, die zumindest teilweise aus besagtem Sekundärmaterial (28) hergestellt sind, wobei die besagten Primärelemente (17) und die besagten Sekundärelemente (32) vorteilhaft angeordnet sind, sodass jedes Primärelement (17) zwischen zwei Sekundärelementen (32) eingefügt ist und jedes Sekundärelement (32) zwischen zwei Primärelemente (17) eingefügt ist,
wobei die besagten im Wesentlichen ebenen Primärelemente insbesondere Primärblättchen (17) umfassen, die zumindest teilweise aus besagtem Primärmaterial (19) gefertigt sind.
wobei die besagten im Wesentlichen ebenen Sekundärelemente insbesondere Sekundärblättchen (32) umfassen, die zumindest teilweise aus besagtem Sekundärmaterial (28) gefertigt sind. wobei die besagten Primärelemente (17) und / oder die besagten Sekundärelemente (32) insbesondere eine Stütze (22) und einen Überzug der besagten Stütze (22) umfassen, jeweils gefertigt aus dem besagten Primärmaterial (19) oder dem besagten Sekundärmaterial (28).

14. Energieerzeuger nach Anspruch 8, umfassend ein Anpassungsmittel zum Anpassen der erzeugten Wärme, wobei das besagte Anpassungsmittel ein Mittel zum Ändern der besagten Menge des besagten Sekundärmaterials (28), das gegenüber dem besagten Primärmaterial (19) liegt und das innerhalb des besagten zuvor festgelegten Höchstabstands (L) angeordnet ist, umfasst.
wobei das besagte Anpassungsmittel insbesondere Folgendes umfasst:
- einen Anpassungskörper (30, 70);
- ein Mittel zum Verschieben des besagten Anpassungskörpers (30, 70) innerhalb der besagten Erzeugungskammer (53) hinsichtlich des besagten Primärmaterials (19) zwischen einer ersten Position (40) und einer zweiten Position (40'), jeweils entsprechend einer maximalen Exposition und einer minimalen Exposition des besagten Sekundärmaterials (28) auf besagtem Primärmaterial (19),
wobei besagter Anpassungskörper (30, 70) aus der aus Folgendem bestehenden Gruppe gewählt wird:
- einem Schildkörper (70), angeordnet zwischen dem besagten Primärmaterial (19) und dem besagten Sekundärmaterial (28);
- einem Stützkörper (30) aus besagtem Sekundärmaterial (28), angeordnet in der Nähe des besagten Primärmaterials (19).
wobei das besagte Primärmaterial (19) insbesondere zwischen dem besagten aktiven Kern (18) und einem enthaltenden Element (55), das den besagten primären aktiven Kern (18) enthält, oder zwischen benachbarten Primärelementen (17) des besagten aktiven Kerns (18) angeordnet ist.

15. Energieerzeuger nach den Ansprüchen 13 und 14, wobei der besagte Anpassungskörper (30, 70) eine Vielzahl von im Wesentlichen ebenen zueinander integralen Anpassungselementen (32, 47) umfasst, die so angeordnet sind, dass jedes Anpassungselement (32, 47) verschiebbar zwischen zwei Primärelementen (17) oder zwischen einem Primärelement (17) und einem Sekundärelement (32) liegt, je nachdem, ob der besagte Anpassungskörper (30, 70) ein Stützkörper (30) oder ein Schildkörper (70) ist, und besagtes Mittel zum Verschieben des besagten Anpassungskörpers (30, 70) so angepasst ist, dass es eine relative Gleitbewegung (39, 79) zwischen den besagten Anpassungselementen (32, 47) und den besagten wechselseitig angeordneten Primärelementen (17) und / oder Sekundärelementen (32) bietet, gemäß einer gemeinsamen Ebene, die parallel sowohl zu den besagten im Wesentlichen ebenen Primärelementen (17) und / oder den besagten im Wesentlichen ebenen Sekundärelementen (32) und den besagten im Wesentlichen ebenen Anpassungselementen (32, 47) liegt, um die jeweiligen Oberflächenabschnitte (18') jedes Sekundärelements (32), das den besagten Primärelementen (17) gegenüberliegt, integral anzupassen.
wobei das besagte Anpassungsmittel insbesondere ein aus der aus Folgendem bestehenden Gruppe ausgewähltes Mittel umfasst:
- einem relativen Rotationsmittel aus besagter Vielzahl von Anpassungselementen (17) und aus besagter Vielzahl von Primär- und / oder Sekundärelementen (32) über einer Rotationsachse des besagten Generators (50);
- einem relativen Umwandlungsmittel aus besagter Vielzahl von Anpassungselementen (32, 47) und aus besagter Vielzahl von Primärelementen (17) und / oder Sekundärelementen (32) gemäß einer Richtung er besagten gemeinsamen Ebene der besagten Anpassungselemente (32, 47) und der besagten Primärelemente (17) und / oder Sekundärelemente (32).

## Revendications

1. Une méthode pour obtenir de l'énergie à l'aide de réactions nucléaires entre de l'hydrogène (31) et un métal de transition, ladite méthode comprenant les étapes suivantes :
- pré-organisation (110) d'une matière première (19) comprenant une quantité prédéterminée de nanostructures en clusters (21) possédant un nombre d'atomes (38) dudit métal de transition inférieur à un nombre prédéterminé d'atomes ;
- maintien dudit hydrogène (31) en contact avec lesdits clusters (21) ;
- chauffage (130) dudit métal primaire (19) à une température de procédé initiale (T₁) supérieure à une température critique prédéterminée ;
- dissociation de molécules de H₂ dudit hydrogène (31) et formation de ions H- (35) en conséquence de ladite étape de chauffage ;
- intervention impulsive (140) sur ladite matière première (19);
- capture orbitale (150) desdits ions H- (35) par lesdites nanostructures en clusters (21) en conséquence de ladite étape (140) d'intervention impulsive ;
- capture (151) desdits ions H- (35) par lesdits atomes (38) desdits clusters (21), en générant une puissance thermique en tant que chauffage de réaction primaire (Q₁);
dissipation (160) de ladite puissance thermique, en maintenant la température de la matière première (19) au-dessus de ladite température critique, **caractérisée par le fait**
**qu'**elle constitue une étape (115) de pré-organisation d'une quantité de matière secondaire (28) faisant face à ladite matière première (19) et au sein d'une distance maximale prédéterminée (L) de ladite matière première (19), ladite matière secondaire (28) étant disposée pour interagir avec des protons (35"') émis par ladite matière première (19) par des réactions nucléaires dépendantes de protons avec dégagement d'énergie se produisant avec un dégagement d'une puissance thermique supplémentaire sous forme d'une chaleur de réaction secondaire (Q₂), de sorte que ladite étape de dissipation (160) comprenne ladite puissance thermique générée en tant que ladite chaleur de réaction primaire (Q₁) et de ladite chaleur de réaction secondaire (Q₂).

2. Une méthode selon la revendication 1, ladite matière secondaire (28) comprenant du lithium, en particulier ledit lithium comprenant des fractions prédéterminées des isotopes ⁶Li et ⁷Li.

3. Une méthode selon la revendication 1, ladite matière secondaire (28) comprenant du bore, en particulier du bore comprenant des fractions prédéterminées des isotopes ¹⁰B et ¹¹B.

4. Une méthode selon la revendication 1, ladite matière secondaire (28) étant un métal de transition.

5. Une méthode selon la revendication 1, ladite matière secondaire (28) étant sélectionnée dans le groupe composé de ²³²Th, ²³⁶U, ²³⁹U, ²³⁹Pu.

6. Une méthode selon la revendication 1, comportant une étape d'ajustage (170) de la puissance thermique générée, comprenant une étape de variation de ladite quantité de matière secondaire (28) faisant face à ladite matière primaire (19) et disposée au sein de ladite distance maximale prédéterminée (L) et est en conséquence exposée auxdits protons (35"') émis par ladite matière primaire (19).

7. Une méthode selon la revendication 1, dans laquelle ladite étape de variation de ladite quantité de matière secondaire (28) exposée auxdits protons (35"') émis comprend une étape de déplacement d'un corps d'ajustage (30, 70) pouvant être déplacé entre une première position (40) et une deuxième position (40') correspondant à une exposition maximum et à une exposition minimum de ladite matière secondaire (28) sur ladite matière primaire (19) respectivement.

8. Un générateur d'énergie (50) par réactions nucléaires entre l'hydrogène (31) et un métal de transition, ledit générateur (50) comprenant :
- un noyau actif (18) comprenant une quantité prédéterminée de matière primaire (19) comprenant des nanostructures en clusters (21) composées d'un nombre d'atomes (38) dudit métal de transition inférieur à un nombre d'atomes maximum prédéterminé ;
- une chambre de génération (53) contenant ledit noyau actif (18) et organisée pour contenir de l'hydrogène (31) afin d'assurer le contact entre ledit hydrogène (31) et lesdits clusters (21) ;
- un dispositif de chauffage pour chauffer ledit noyau actif (18) dans ladite chambre de génération (53) à une température de procédé initiale (T₁) supérieure à une température critique prédéterminée, ladite température de procédé initiale étant appropriée pour causer une dissociation des molécules H₂ dudit hydrogène (31) et une formation de ions H- (35) ;
- un inducteur (61, 62, 67) pour la création d'une intervention impulsive (140) sur ledit noyau actif (18), ladite intervention impulsive (140) étant appropriée pour causer une capture orbitale (150) desdits ions H- (35) par ladite structure cristalline à clusters, puis une étape de capture (151) desdits ions H- (35) par lesdits atomes (38) desdits clusters (21), en produisant ainsi une chaleur de réaction primaire (Q₁);
- un dispositif d'évacuation de la chaleur (54) évacuant une puissance thermique de ladite chambre de génération (53) et maintenant la température dudit noyau actif (18) au-dessus de ladite température critique lors de l'évacuation de ladite puissance thermique,
**caractérisée par le fait qu'**il comprend, dans une distance maximale prédéterminée (L) de ladite matière primaire (19), une quantité de matière secondaire (28) organisée pour interagir avec des protons dont l'énergie est supérieure à un seuil d'énergie préétabli, de sorte que des protons émis par ladite capture orbitale (150) desdits ions H- (35) engendre des réactions nucléaires secondaires à dégagement d'énergie se produisant avec un dégagement de chaleur de réaction secondaire (Q₂), et le dispositif d'évacuation de la chaleur (54) est en mesure d'évacuer une puissance thermique comprenant ladite chaleur de réaction primaire (Q₁) et ladite chaleur de réaction secondaire (Q₂).

9. Un générateur d'énergie (50) selon la revendication 8, dans lequel ladite matière secondaire (28), qui est organisée pour capturer et engager lesdits protons émis (35"'), est sélectionnée dans le groupe composé de lithium, bore et un métal de transition.

10. Un générateur d'énergie (50) selon la revendication 8, muni d'un élément secondaire, autrement dit avec un corps solide comprenant ladite matière secondaire, ledit élément secondaire comprenant un métal à l'état amorphe, en particulier un alliage d'une pluralité de métaux à l'état amorphe, comprenant :
- un métal structurel ;
- ladite matière secondaire, sélectionnée dans un groupe composé de bore et de lithium,
en particulier, ledit métal structurel étant sélectionné dans le groupe composé de fer, de nickel et d'une combinaison de Fe et de Ni.

11. Un générateur d'énergie (50) selon la revendication 10, dans lequel ledit élément secondaire est obtenu avec les étapes suivantes :
- pré-organisation d'une quantité dudit métal à l'état fondu, à une température prédéterminée, et selon une forme préfixée ;
- refroidissement dudit métal fondu dans ladite forme, avec une température de refroidissement suffisamment élevée pour que ledit métal fondu durcisse en maintenant l'état amorphe.
en particulier, ladite étape de pré-organisation comprend une étape de moulage par injection.

12. Un générateur d'énergie (50) selon la revendication 8, ledit élément secondaire (66) formant une portion d'un élément contenant (55) ledit noyau actif (18),
en particulier ledit élément contenant (55) comprenant un alliage d'un métal de transition et dudit métal secondaire.

13. Un générateur d'énergie selon la revendication 8, dans lequel ledit noyau actif (18) comprend une pluralité d'éléments primaires substantiellement plans (17) réalisés au moins en partie avec ladite matière primaire (19), et une pluralité d'éléments secondaires substantiellement plans (32) réalisés au moins en partie avec ladite matière secondaire (28) étant prévus, lesdits éléments primaires (17) et lesdits éléments secondaires (32) étant disposés de façon avantageuse de sorte que chaque élément primaire (17) s'intercale entre deux éléments secondaires (32) et que chaque élément secondaire (32) s'intercale entre deux éléments primaires (17),
en particulier lesdits éléments primaires substantiellement plans comprenant des lamelles primaires (17) réalisés en partie avec ladite matière primaire (19).
en particulier lesdits éléments secondaires substantiellement plans comprennent des lamelles secondaires (32) réalisés au moins en partie avec matière secondaire (28).
en particulier lesdits éléments primaires (17) et/ou lesdits éléments secondaires (32) comprenant un support (22) et un revêtement dudit support (22), réalisés respectivement avec ladite matière primaire (19) ou ladite matière secondaire (28).

14. Un générateur d'énergie selon la revendication 8, comprenant un dispositif d'ajustage pour ajuster la chaleur produite, ledit dispositif d'ajustage comprenant un dispositif de variation de ladite quantité de matière secondaire (28) faisant face à ladite matière primaire (19), et organisé au sein de ladite distance maximale prédéterminée (L).
en particulier ledit dispositif d'ajustage comprend :
- un corps d'ajustage (30, 70) ;
- un dispositif pour le déplacement dudit corps d'ajustage (30, 70) au sein de ladite chambre de génération (53) relativement à ladite matière primaire (19) entre une première position (40) et une deuxième position (40') correspondant à une exposition maximale et à une exposition minimale de ladite matière secondaire (28) sur ladite matière primaire (19), respectivement,
ledit corps d'ajustage (30, 70) étant sélectionné dans un groupe sélectionné dans le groupe composé :
- d'un corps écran (70) placé entre ladite matière primaire (19) et ladite matière secondaire (28) ;
- d'un corps d'ajustage (30) de ladite matière secondaire (28) disposé à proximité de ladite matière primaire (19).
en particulier lesdits éléments primaires (19) étant disposés entre ledit noyau actif (18) et un élément contenant (55) contenant ledit noyau actif primaire (18), ou disposé entre éléments primaires (17) adjacents dudit noyau actif (18).

15. Un générateur d'énergie selon les revendications 13 et 14, le corps d'ajustage (30, 70) comprenant une pluralité d'éléments d'ajustage substantiellement plans (32, 47) s'intercalant par coulissement entre eux, et disposés de sorte que chaque élément d'ajustage (32, 47) s'intercale par coulissement entre deux éléments primaires (17) ou entre un élément primaire (17) et un élément secondaire (32) selon que ledit corps d'ajustage (30, 70) est un corps de support (30) ou un corps écran (70), et ledit dispositif de déplacement dudit corps d'ajustage (30, 70) étant adapté pour assurer un mouvement coulissant relatif (39, 79) entre lesdits éléments d'ajustage (32, 47) et lesdits éléments primaires (17) et/ou éléments secondaires (32), intercalés mutuellement entre eux selon un plan commun parallèle aux deux dits éléments primaires (17) substantiellement plans et/ou auxdits éléments secondaires (32) substantiellement plans et auxdits éléments d'ajustage (32, 47) substantiellement plans, de façon à ajuster de façon intégrale des parties de surface respectives (18') de chaque élément secondaire (32) faisant face auxdits éléments primaires (17).
en particulier ledit dispositif d'ajustage comprenant un dispositif sélectionné parmi un groupe comprenant :
- un dispositif de rotation relative de ladite pluralité d'éléments d'ajustage (17) et de ladite pluralité d'éléments primaires et/ou secondaires (32) dans un axe de rotation dudit générateur (50) ;
- un dispositif de translation relative de ladite pluralité d'éléments d'ajustage (32, 47) et de ladite pluralité d'éléments primaires (17) et/ou secondaires (32) selon une direction dudit plan commun desdits éléments d'ajustage (32, 47) et desdits éléments primaires (17) et/ou secondaires (32).
